# EUROPEAN PATENT APPLICATION

(11) **EP 4 534 178 A1**
(43) Date of publication of application: **09.04.2025**
(21) Application number: 22944784.2
(22) Date of filing: 31.05.2022
(51) Int. Cl.: B01D 53/06

(54) **CARBON DIOXIDE RECOVERY APPARATUS, AIR-CONDITIONING AND VENTILIATION SYSTEM, AND CARBON DIOXIDE RECOVERY METHOD**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); FUKUI, Tomoya, Tokyo 100-8310 (JP); ONAKA, Yoji, Tokyo 100-8310 (JP); SHINOKI, Toshio, Tokyo 100-8310 (JP); INOUE, Takumi, Tokyo 100-8310 (JP); KAWAMOTO, Makoto, Tokyo 100-8310 (JP)
(74) Representative: Meissner Bolte Partnerschaft mbB
(86) International application number: PCT/JP2022/022029
(87) International publication number: WO 2023/233495

(57) **Abstract**

A carbon dioxide capturing apparatus (1) comprises a storage unit (10), a collection unit (30), and an adsorption unit (20). The adsorption unit (20) has an adsorption space (25) formed therein. The adsorption unit (20) is provided with an inlet (26) to allow a gas (43) containing carbon dioxide to flow into the adsorption space (25). An adsorbent (40) falls from the storage unit (10) through the adsorption space (25) toward the collection unit (30) by the self-weight of the adsorbent (40). The gas (43) is introduced through the inlet (26) into the adsorption space (25) in a direction intersecting a direction in which the adsorbent falls (40). The adsorbent (40) adsorbs in the adsorption space (25) carbon dioxide contained in the gas (43).

## Description

### TECHNICAL FIELD

The present disclosure relates to a carbon dioxide capturing apparatus, an air conditioning ventilation system, and a carbon dioxide capturing method.

### BACKGROUND ART

Japanese Patent Laying-Open No. 2014-516785 (PTL 1) discloses a reactor to remove carbon dioxide contained in a gas. Specifically, it allows microbeads to adsorb carbon dioxide contained in the gas to remove the carbon dioxide from the gas.

### CITATION LIST

### PATENT LITERATURE

[PTL 1] Japanese National Patent Publication No. 2014-516785

### SUMMARY OF INVENTION

### TECHNICAL PROBLEM

In the reactor disclosed in PTL 1, the gas flows in a direction exactly opposite to that in which the microbeads fall. Therefore, the gas receives large flow resistance from the microbeads. In order to cause the gas to flow through the reactor, it is necessary to increase the pressure of the gas flowing into the reactor or to increase the size of the cross section of the reactor perpendicular to the direction in which the gas flows. However, if the pressure of the gas flowing into the reactor is increased, the reactor of PTL 1 is only applicable to gases having high pressures, such as steam discharged from a power plant or the like. Increasing the size of the reactor requires a large area to install the reactor of PTL 1.

The present disclosure has been made in view of the above-described problems, and an object in a first aspect of the present disclosure is to provide a carbon dioxide capturing apparatus and air conditioning ventilation system that is also applicable to a gas having a lower pressure and can further be reduced in size. An object in a second aspect of the present disclosure is to provide a carbon dioxide capturing method that is also applicable to a gas having a lower pressure and also allows a carbon dioxide capturing apparatus to be reduced in size.

### SOLUTION TO PROBLEM

A carbon dioxide capturing apparatus according to the present disclosure comprises a storage unit to accommodate an adsorbent, a collection unit to collect the adsorbent, and an adsorption unit. The adsorption unit has an adsorption space formed therein. The adsorption unit has an inlet to allow a gas containing carbon dioxide to flow into the adsorption space. The adsorption unit is disposed between the storage unit and the collection unit. The adsorbent falls from the storage unit through the adsorption space toward the collection unit by the self-weight of the adsorbent. The gas is introduced through the inlet into the adsorption space in a direction intersecting a direction in which the adsorbent falls. The adsorbent adsorbs in the adsorption space carbon dioxide contained in the gas.

An air conditioning ventilation system of the present disclosure comprises the carbon dioxide capturing apparatus of the present disclosure. A carbon dioxide capturing method of the present disclosure comprises adsorbing carbon dioxide contained in a gas on an adsorbent by bringing the adsorbent into contact with the gas containing the carbon dioxide by allowing the adsorbent to fall through an adsorption space of an adsorption unit by the self-weight of the adsorbent. The gas is introduced into the adsorption space in a direction intersecting a direction in which the adsorbent falls. The carbon dioxide capturing method of the present disclosure further comprises collecting the adsorbent having adsorbed the carbon dioxide.

### ADVANTAGEOUS EFFECTS OF INVENTION

The presently disclosed carbon dioxide capturing apparatus and air conditioning ventilation system introduces a gas into an adsorption space in a direction intersecting a direction in which an adsorbent falls. Thus, the gas receives reduced flow resistance from the adsorbent. The presently disclosed carbon dioxide capturing apparatus and air conditioning ventilation system is also applicable to gases having lower pressures and can also be further reduced in size.

The presently disclosed carbon dioxide capturing method introduces a gas into an adsorption space in a direction intersecting a direction in which an adsorbent falls. Thus, the gas receives reduced flow resistance from the adsorbent. The presently disclosed carbon dioxide capturing method is also applicable to gases having lower pressures. The presently disclosed carbon dioxide capturing method allows a carbon dioxide capturing apparatus to be further reduced in size.

### BRIEF DESCRIPTION OF DRAWINGS

Fig. 1 is a schematic diagram of a carbon dioxide capturing apparatus according to a first embodiment.
Fig. 2 is a schematic cross section of the carbon dioxide capturing apparatus according to the first embodiment taken along a cross-sectional line II-II indicated in Fig. 1.
Fig. 3 is a schematic diagram of the carbon dioxide capturing apparatus according to the first embodiment.
Fig. 4 is a schematic cross section of the carbon dioxide capturing apparatus according to the first embodiment taken along a cross-sectional line IV-IV indicated in Fig. 3.
Fig. 5 is a schematic diagram of the carbon dioxide capturing apparatus according to the first embodiment.
Fig. 6 is a schematic cross section of the carbon dioxide capturing apparatus according to the first embodiment taken along a cross-sectional line VI-VI indicated in Fig. 5.
Fig. 7 is a schematic cross section of a carbon dioxide capturing apparatus according to a first exemplary variation of the first embodiment.
Fig. 8 is a schematic cross section of a carbon dioxide capturing apparatus according to a second exemplary variation of the first embodiment.
Fig. 9 is a schematic cross section of a carbon dioxide capturing apparatus according to a third exemplary variation of the first embodiment.
Fig. 10 is a schematic cross section of a carbon dioxide capturing apparatus according to a fourth exemplary variation of the first embodiment.
Fig. 11 is a schematic cross section of a carbon dioxide capturing apparatus according to a fifth exemplary variation of the first embodiment.
Fig. 12 is a schematic diagram for illustrating a first example of installing the carbon dioxide capturing apparatus according to the first embodiment.
Fig. 13 is a schematic diagram for illustrating a second example of installing the carbon dioxide capturing apparatus according to the first embodiment.
Fig. 14 is a schematic diagram for illustrating a third example of installing the carbon dioxide capturing apparatus according to the first embodiment.
Fig. 15 is a schematic diagram of a carbon dioxide capturing apparatus according to a second embodiment.
Fig. 16 is a schematic diagram of the carbon dioxide capturing apparatus according to the second embodiment.
Fig. 17 is a schematic diagram of the carbon dioxide capturing apparatus according to the second embodiment.
Fig. 18 is a schematic diagram of a carbon dioxide capturing apparatus according to a third embodiment.
Fig. 19 is a schematic diagram of the carbon dioxide capturing apparatus according to the third embodiment.
Fig. 20 is a schematic diagram of a transport container included in the carbon dioxide capturing apparatus according to the third embodiment.
Fig. 21 is a schematic cross section of the transport container included in the carbon dioxide capturing apparatus according to the third embodiment, as taken along a cross-sectional line XXI-XXI indicated in Fig. 20.
Fig. 22 is a schematic diagram of the carbon dioxide capturing apparatus according to the third embodiment.
Fig. 23 is a schematic diagram of the transport container included in the carbon dioxide capturing apparatus according to the third embodiment.
Fig. 24 is a schematic cross section of the transport container included in the carbon dioxide capturing apparatus according to the third embodiment, as taken along a cross-sectional line XXIV-XXIV indicated in Fig. 23.
Fig. 25 is a schematic diagram of the carbon dioxide capturing apparatus according to the third embodiment.
Fig. 26 is a schematic diagram of a carbon dioxide capturing apparatus according to a fourth embodiment.
Fig. 27 is a schematic diagram of the carbon dioxide capturing apparatus according to the fourth embodiment.
Fig. 28 is a schematic diagram of the carbon dioxide capturing apparatus according to the fourth embodiment.
Fig. 29 is a schematic diagram of the carbon dioxide capturing apparatus according to the fourth embodiment.
Fig. 30 is a schematic diagram of the carbon dioxide capturing apparatus according to the fourth embodiment.
Fig. 31 is a schematic diagram of the carbon dioxide capturing apparatus according to the fourth embodiment.
Fig. 32 is a schematic diagram of the carbon dioxide capturing apparatus according to the fourth embodiment.
Fig. 33 is a schematic diagram of the carbon dioxide capturing apparatus according to the fourth embodiment.
Fig. 34 is a schematic diagram of a carbon dioxide capturing apparatus according to an exemplary variation of the fourth embodiment.
Fig. 35 is a schematic diagram of the carbon dioxide capturing apparatus according to the exemplary variation of the fourth embodiment.
Fig. 36 is a schematic diagram of the carbon dioxide capturing apparatus according to the exemplary variation of the fourth embodiment.
Fig. 37 is a schematic diagram of the carbon dioxide capturing apparatus according to the exemplary variation of the fourth embodiment.
Fig. 38 is a schematic diagram of the carbon dioxide capturing apparatus according to the exemplary variation of the fourth embodiment.
Fig. 39 is a schematic diagram of the carbon dioxide capturing apparatus according to the exemplary variation of the fourth embodiment.
Fig. 40 is a schematic diagram of the carbon dioxide capturing apparatus according to the exemplary variation of the fourth embodiment.
Fig. 41 is a schematic cross section of a carbon dioxide capturing apparatus according to a fifth embodiment.
Fig. 42 is a schematic cross section of the carbon dioxide capturing apparatus according to the fifth embodiment.
Fig. 43 is a schematic cross section of the carbon dioxide capturing apparatus according to the fifth embodiment.
Fig. 44 is a schematic cross section of a carbon dioxide capturing apparatus according to a first exemplary variation of the fifth embodiment.
Fig. 45 is a schematic cross section of a carbon dioxide capturing apparatus according to a second exemplary variation of the fifth embodiment.
Fig. 46 is a schematic cross section of the carbon dioxide capturing apparatus according to the second exemplary variation of the fifth embodiment.

### DESCRIPTION OF EMBODIMENTS

Hereinafter, embodiments of the present disclosure will be described. Identical components are identically denoted and will not be described repeatedly.

### First Embodiment.

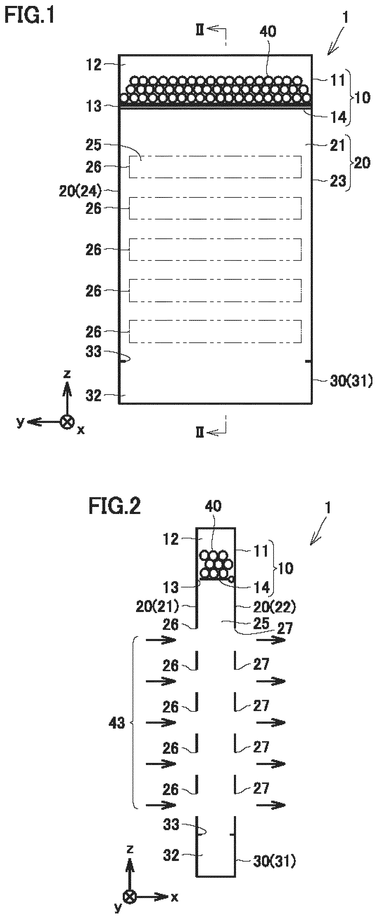

A carbon dioxide capturing apparatus 1 according to a first embodiment will now be described with reference to Figs. 1 to 6. Carbon dioxide capturing apparatus 1 comprises a storage unit 10, an adsorption unit 20, and a collection unit 30.

Storage unit 10 accommodates an adsorbent 40. Adsorbent 40 can adsorb carbon dioxide. Adsorbent 40 is a solid adsorbent carrying amine, zeolite, silica gel, diatomite, alumina, or activated carbon for example. Although not particularly limited, adsorbent 40 has a spherical shape or a cylindrical shape for example. Figs. 1 to 6 show adsorbent 40 darker as adsorbent 40 adsorbs more carbon dioxide. Storage unit 10 is disposed above adsorption unit 20.

Storage unit 10 includes a storage body 11 and a valve 14. Inside storage body 11 is formed a storage space 12 to store adsorbent 40. Storage body 11 (specifically, a bottom portion of storage body 11) is provided with an opening 13. Opening 13 communicates with storage space 12 and an adsorption space of adsorption unit 20. Valve 14 opens and closes opening 13. When valve 14 closes opening 13, adsorbent 40 is stored in storage unit 10. When valve 14 opens opening 13, adsorbent 40 falls toward the adsorption space of adsorption unit 20 by the self-weight of adsorbent 40.

Adsorption unit 20 is disposed between storage unit 10 and collection unit 30. In adsorption unit 20, adsorbent 40 comes into contact with a gas 43 containing carbon dioxide and adsorbs the carbon dioxide contained in gas 43. While gas 43 is not particularly limited insofar as it is a gas containing carbon dioxide, it is for example air.

Specifically, adsorption unit 20 includes a front wall 21, a rear wall 22 opposite to front wall 21, a side wall 23, and a side wall 24 opposite to side wall 23. Side walls 23 and 24 are each connected to front wall 21 and rear wall 22. An adsorption space 25 is formed inside adsorption unit 20. Front wall 21, rear wall 22, and side walls 23 and 24 define adsorption space 25. As shown in Figs. 1 and 2, front wall 21 has a width larger than that of each of side walls 23 and 24. Rear wall 22 has a width larger than that of each of side walls 23 and 24. In the present specification, the width of front wall 21 is a length of front wall 21 in a direction (a y direction) perpendicular to a direction of falling through adsorption unit 20 (i.e., a - z direction). The width of rear wall 22 is a length of rear wall 22 in the direction (the y direction) perpendicular to the direction of falling through adsorption unit 20 (i.e., the - z direction). The width of side wall 23 is a length of side wall 23 in the direction (an x direction) perpendicular to the direction of falling through adsorption unit 20 (i.e., the - z direction). The width of side wall 24 is a length of side wall 24 in the direction (the x direction) perpendicular to the direction of falling through adsorption unit 20 (i.e., the - z direction).

Adsorption unit 20 (specifically, front wall 21) is provided with an opening 26. Gas 43 containing carbon dioxide flows through opening 26 into adsorption space 25. In the present embodiment, opening 26 is an inlet for gas 43. Opening 26 has a width for example of 60% or more and 100% or less of the width of front wall 21. Opening 26 may have a width of 80% or more and 95% or less of the width of front wall 21. In the present specification, the width of opening 26 is a length of opening 26 in a direction (the y direction) perpendicular to the direction of falling through adsorption unit 20 (i.e., the - z direction). While in the present embodiment adsorption unit 20 is provided with a plurality of openings 26, adsorption unit 20 may be provided with at least one opening 26.

Adsorption unit 20 (specifically, rear wall 22) is provided with an opening 27. Gas 43 flows out of adsorption space 25 through opening 27. In the present embodiment, opening 27 is an outlet for gas 43. Opening 27 has a width for example of 60% or more and 100% or less of the width of rear wall 22. In the present specification, the width of opening 27 is a length of opening 27 in a direction (the y direction) perpendicular to the direction of falling through adsorption unit 20 (i.e., the - z direction). While in the present embodiment adsorption unit 20 is provided with a plurality of openings 27, adsorption unit 20 may be provided with at least one opening 27. Opening 27 faces opening 26 for example in a direction (the x direction) perpendicular to the direction of falling through adsorption unit 20 (i.e., the - z direction).

Adsorbent 40 falls from storage unit 10 through adsorption space 25 toward collection unit 30 by the self-weight of adsorbent 40. Adsorbent 40 falls in a direction (or the - z direction), which is for example the direction of gravity. Gas 43 is introduced through opening 26 into adsorption space 25 in a direction (e.g., a + x direction) intersecting the direction in which adsorbent 40 falls (e.g., the - z direction). Adsorbent 40 in adsorption space 25 comes into contact with gas 43 and adsorbs carbon dioxide contained in gas 43. Gas 43 having carbon dioxide removed by adsorbent 40 flows out of adsorption space 25 through opening 27.

Adsorption unit 20 larger in size in the direction in which adsorbent 40 falls (e.g., the - z direction) allows adsorbent 40 to be in contact with gas 43 for a longer period of time to allow adsorbent 40 to more efficiently adsorb carbon dioxide. Accordingly, when gas 43 has a low concentration of carbon dioxide, adsorption unit 20 is increased in size in the direction in which adsorbent 40 falls (e.g., the - z direction). When gas 43 has a high concentration of carbon dioxide, adsorption unit 20 may have a small size in the direction in which adsorbent 40 falls (e.g., the - z direction).

Collection unit 30 collects adsorbent 40 having adsorbed carbon dioxide contained in gas 43. Collection unit 30 is disposed below adsorption unit 20. Collection unit 30 includes a collection body 31. Inside collection body 31 is formed a collection space 32 to accommodate adsorbent 40 having adsorbed carbon dioxide. Collection body 31 (specifically, a top portion of collection body 31) is provided with an opening 33. Opening 33 communicates with adsorption space 25 and collection space 32. Collection unit 30 may be detachably attachable to adsorption unit 20.

An operation of carbon dioxide capturing apparatus 1 and a carbon dioxide capturing method according to the present embodiment will now be described with reference to Figs. 1 to 6.

As shown in Figs. 1 and 2, valve 14 closes opening 13. Adsorbent 40 is stored in storage unit 10.

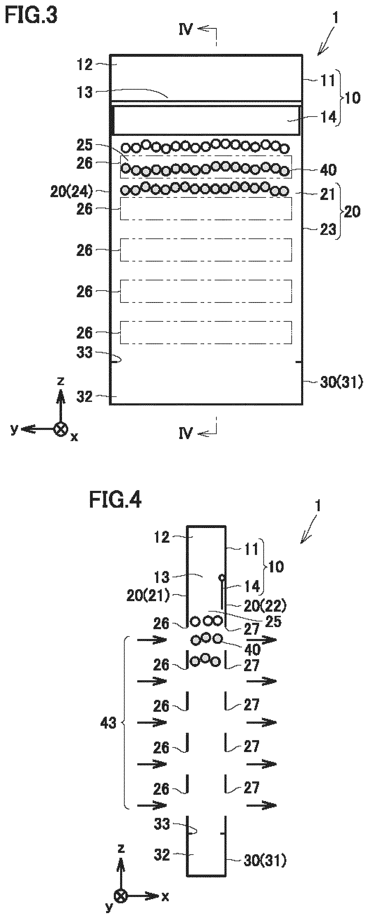

As shown in Figs. 3 and 4, valve 14 opens opening 13. Adsorbent 40 falls toward adsorption space 25 of adsorption unit 20 by the self-weight of adsorbent 40. In adsorption unit 20, adsorbent 40 falls from storage unit 10 through adsorption space 25 toward collection unit 30 by the self-weight of adsorbent 40. Gas 43 is introduced through opening 26 into adsorption space 25 in a direction (e.g., the + x direction) intersecting the direction in which adsorbent 40 falls (e.g., the - z direction). Adsorbent 40 in adsorption space 25 comes into contact with gas 43 and adsorbs carbon dioxide contained in gas 43. Gas 43 having carbon dioxide removed by adsorbent 40 flows out of adsorption space 25 through opening 27.

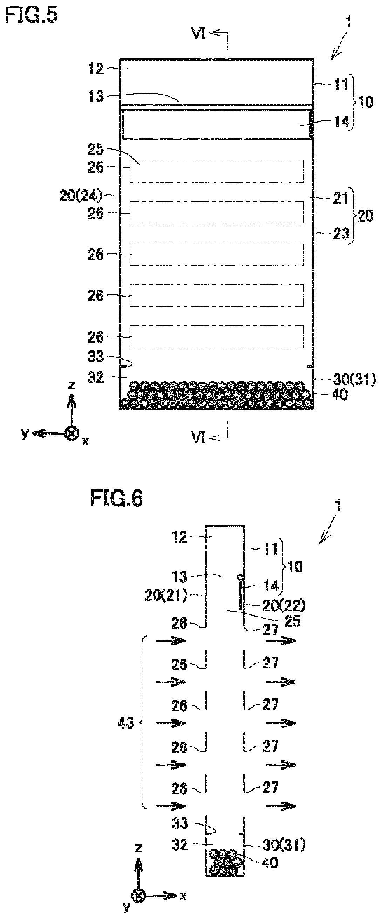

Adsorbent 40 having adsorbed carbon dioxide contained in gas 43 falls from adsorption unit 20 toward collection unit 30 by the self-weight of adsorbent 40. As shown in Figs. 5 and 6, adsorbent 40 having adsorbed carbon dioxide passes through opening 33 and is accommodated in collection space 32 of collection unit 30. Adsorbent 40 having adsorbed carbon dioxide is collected in collection unit 30.

### (Exemplary Variation)

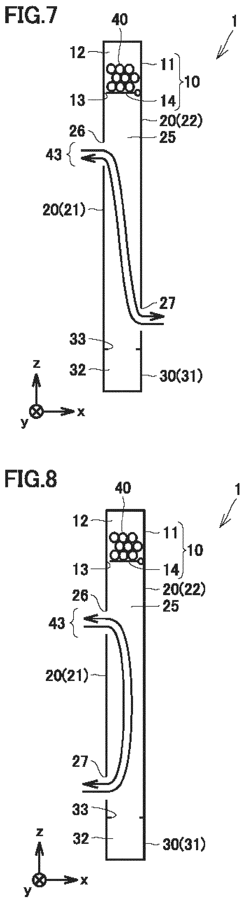

As shown in Fig. 7, carbon dioxide capturing apparatus 1 of a first exemplary variation of the present embodiment has one opening 26 provided at adsorption unit 20 (specifically through front wall 21), and one opening 27 provided at adsorption unit 20 (specifically through rear wall 22). Opening 27 is disposed offset from the corresponding opening 26 in the direction in which adsorbent 40 falls (e.g., the - z direction). Depending on the direction in which gas 43 flows, opening 26 may function as an inlet for gas 43 and opening 27 may function as an outlet for gas 43, or opening 27 may function as an inlet for gas 43 and opening 26 may function as an outlet for gas 43.

As shown in Fig. 8, carbon dioxide capturing apparatus 1 of a second exemplary variation of the present embodiment has one opening 26 and one opening 27 provided at adsorption unit 20 through front wall 21. Opening 27 is disposed offset from the corresponding opening 26 in the direction in which adsorbent 40 falls (e.g., the - z direction). Depending on the direction in which gas 43 flows, opening 26 may function as an inlet for gas 43 and opening 27 may function as an outlet for gas 43, or opening 27 may function as an inlet for gas 43 and opening 26 may function as an outlet for gas 43. Carbon dioxide capturing apparatus 1 of the second exemplary variation of the present embodiment is suitable for installation on a wall (not shown).

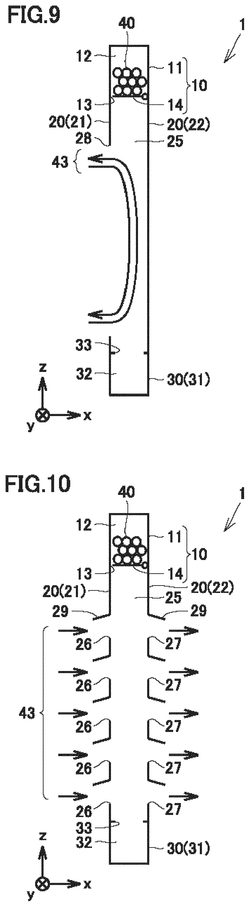

As shown in Fig. 9, carbon dioxide capturing apparatus 1 of a third exemplary variation of the present embodiment has one opening 28 provided at adsorption unit 20 through front wall 21. Opening 28 is larger than each of openings 26 and 27. Opening 28 functions as an inlet and an outlet for gas 43. Depending on the direction in which gas 43 flows, an upper portion of opening 28 may function as an inlet for gas 43 and a lower portion of opening 28 may function as an outlet for gas 43, or the lower portion of opening 28 may function as an inlet for gas 43 and the upper portion of opening 28 may function as an outlet for gas 43. Carbon dioxide capturing apparatus 1 of the third exemplary variation of the present embodiment is suitable for installation on a wall (not shown).

As shown in Fig. 10, carbon dioxide capturing apparatus 1 of a fourth exemplary variation of the present embodiment includes an eave 29 provided at adsorption unit 20 above each of openings 26 and 27. Eave 29 prevents rain, snow or sunlight from entering adsorption space 25. Eave 29 may be provided above one of opening 26 or opening 27.

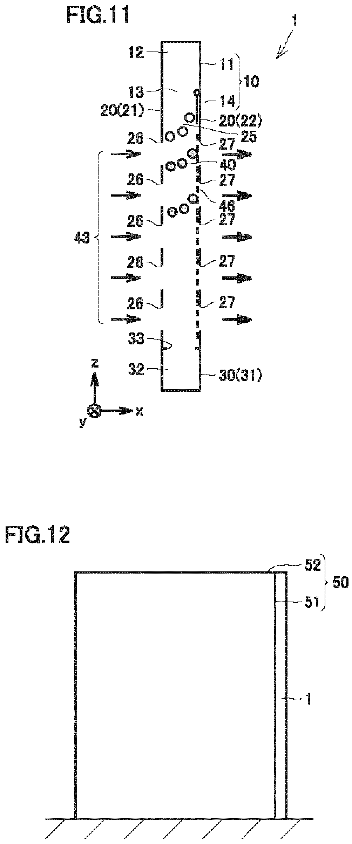

As shown in Fig. 11, for carbon dioxide capturing apparatus 1 of a fifth exemplary variation of the present embodiment, adsorption unit 20 includes a net 46 that passes gas 43 and does not pass adsorbent 40. Net 46 covers opening 27. Although not particularly limited, net 46 is formed of metal such as stainless steel. Net 46 may further cover opening 26. Net 46 that covers both opening 26 and opening 27 can prevent adsorbent 40 from exiting adsorption unit 20 as adsorbent 40 is carried away by gas 43 when gas 43 flows into adsorption unit 20 in various directions.

### (Example of Installation of Carbon Dioxide Capturing Apparatus 1)

As shown in Figs. 12 to 14, carbon dioxide capturing apparatus 1 is installed for example on a building 50. Building 50 includes a side wall 51 and a rooftop 52. Building 50 includes, but not limited to, a high-rise building or a condominium, for example.

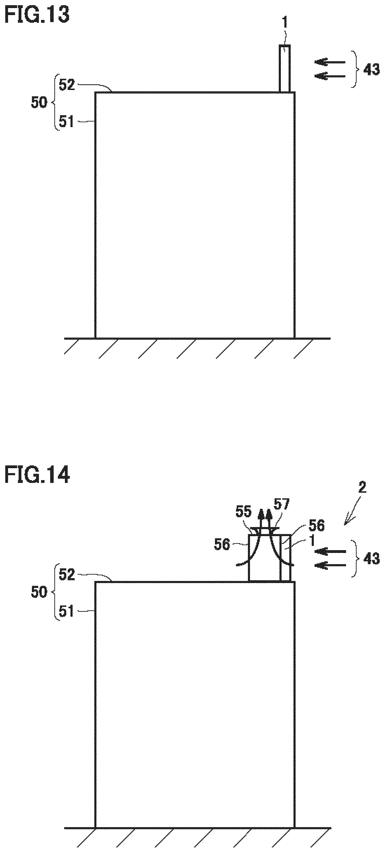

Specifically, as shown in Fig. 12, in a first example of installation according to the present embodiment, carbon dioxide capturing apparatus 1 is installed on side wall 51 of building 50. As shown in Fig. 13, in a second example of installation according to the present embodiment, carbon dioxide capturing apparatus 1 is installed on rooftop 52 of building 50. When carbon dioxide capturing apparatus 1 is thus installed outdoors, air blown outdoors causes gas 43 to flow into adsorption unit 20, and carbon dioxide capturing apparatus 1 can capture carbon dioxide contained in gas 43.

As shown in Fig. 14, in a third example of installation according to the present embodiment, carbon dioxide capturing apparatus 1 is installed in front of an air intake port 56 of an air conditioning outdoor unit 55. In order to facilitate installation of carbon dioxide capturing apparatus 1, carbon dioxide capturing apparatus 1 may be supported by air conditioning outdoor unit 55. Although not particularly limited, air conditioning outdoor unit 55 is installed outdoors such as on rooftop 52 of building 50, for example. Air conditioning outdoor unit 55 is provided with air intake port 56 and an air exhaust port 57. Carbon dioxide capturing apparatus 1 and air conditioning outdoor unit 55 are included in an air conditioning ventilation system 2 of the present embodiment. In the present specification, air conditioning ventilation system 2 means a system that performs air conditioning, ventilation, or both air conditioning and ventilation for building 50.

Carbon dioxide capturing apparatus 1, air conditioning ventilation system 2, and the carbon dioxide capturing method according to the present embodiment have an effect, as described below.

Carbon dioxide capturing apparatus 1 of the present embodiment comprises storage unit 10 to accommodate adsorbent 40, collection unit 30 to collect adsorbent 40, and adsorption unit 20. Adsorption space 25 is formed inside adsorption unit 20. Adsorption unit 20 is provided with an inlet (e.g., opening 26) through which gas 43 containing carbon dioxide flows into adsorption space 25. Adsorption unit 20 is disposed between storage unit 10 and collection unit 30. Adsorbent 40 falls from storage unit 10 through adsorption space 25 toward collection unit 30 by the self-weight of adsorbent 40. Gas 43 is introduced through the inlet into adsorption space 25 in a direction intersecting a direction in which adsorbent 40 falls. Adsorbent 40 adsorbs in adsorption space 25 carbon dioxide contained in gas 43.

Carbon dioxide capturing apparatus 1 introduces gas 43 into adsorption space 25 in a direction intersecting the direction in which adsorbent 40 falls. Thus, gas 43 receives reduced flow resistance from adsorbent 40. Carbon dioxide capturing apparatus 1 is also applicable to gas 43 having a lower pressure and can also be further reduced in size. Further, adsorbent 40 falls from storage unit 10 through adsorption space 25 toward collection unit 30 by the self-weight of adsorbent 40. This can eliminates the necessity of using electric power to transport adsorbent 40 from storage unit 10 to collection unit 30 (for example using a pneumatic conveyor).

In carbon dioxide capturing apparatus 1 of the present embodiment, storage unit 10 is disposed above adsorption unit 20. Collection unit 30 is disposed below adsorption unit 20.

Accordingly, adsorbent 40 falls from storage unit 10 to collection unit 30 through adsorption unit 20 by the self-weight of adsorbent 40. This can eliminates the necessity of using electric power to transport adsorbent 40 from storage unit 10 to collection unit 30.

In carbon dioxide capturing apparatus 1 of the present embodiment, storage unit 10 includes storage body 11 and a first valve (valve 14). Inside storage body 11 is formed storage space 12 to store adsorbent 40. Storage body 11 is provided with a first opening (opening 13). The first opening communicates with storage space 12 and adsorption space 25. The first valve opens and closes the first opening.

The first valve (valve 14) allows storage unit 10 to store a sufficient amount of adsorbent 40 so that subsequently the sufficient amount of adsorbent 40 can be supplied to adsorption unit 20. Carbon dioxide contained in gas 43 can be captured more efficiently.

In carbon dioxide capturing apparatus 1 of the present embodiment, adsorption unit 20 includes a first wall (front wall 21) and a second wall (side wall 23) connected to the first wall. The first and second walls define a portion of adsorption space 25. The first wall has a larger width than the second wall. An inlet (e.g., opening 26) is provided through the first wall.

This allows the inlet (e.g., opening 26) to have an increased area. More gas 43 can be introduced into adsorption space 25 through the inlet. Carbon dioxide contained in gas 43 can be captured more efficiently.

In carbon dioxide capturing apparatus 1 of the present embodiment, the inlet (e.g., opening 26) has a width of 60% or more and 100% or less of that of the first wall (front wall 21).

This allows the inlet (e.g., opening 26) to have an increased area. More gas 43 can be introduced into adsorption space 25 through the inlet. Carbon dioxide contained in gas 43 can be captured more efficiently.

In carbon dioxide capturing apparatus 1 of the present embodiment, adsorption unit 20 includes eave 29 provided above the inlet (e.g., opening 26).

Eave 29 prevents rain, snow or sunlight from entering adsorption space 25. This can prevent rain or snow from coming into contact with adsorbent 40 or prevent adsorbent 40 from being exposed to sunlight. This can in turn prevent adsorbent 40 from providing poor adsorption attributed to rain, snow, or sunlight. Carbon dioxide contained in gas 43 can be captured more efficiently for a longer period of time.

In carbon dioxide capturing apparatus 1 of the present embodiment, adsorption unit 20 includes net 46 allowing gas 43 to pass therethrough and preventing adsorbent 40 from passing therethrough. Adsorption unit 20 is provided with an outlet (e.g., opening 27) through which gas 43 flows out of adsorption space 25. Net 46 covers the outlet.

Net 46 can pass gas 43 having carbon dioxide removed by adsorbent 40 and prevent adsorbent 40 from being carried away by gas 43 and exiting adsorption unit 20 through the outlet (e.g., opening 27).

Carbon dioxide capturing apparatus 1 of the present embodiment is installed on rooftop 52 or side wall 51 of building 50.

In many cases, outside air flows at a faster velocity around rooftop 52 of building 50 than on the ground. By installing carbon dioxide capturing apparatus 1 on building 50 at rooftop 52, more gas 43 can be introduced into adsorption space 25. Carbon dioxide contained in gas 43 can be captured more efficiently.

Installing carbon dioxide capturing apparatus 1 on building 50 at side wall 51 allows adsorption unit 20 to be increased in size in the direction in which adsorbent 40 falls, and also allows flow of outside air to be utilized to introduce gas 43 into adsorption space 25. More gas 43 can be introduced into adsorption space 25. Carbon dioxide contained in gas 43 can be captured more efficiently.

Air conditioning ventilation system 2 of the present embodiment comprises carbon dioxide capturing apparatus 1 and air conditioning outdoor unit 55. Air conditioning outdoor unit 55 is provided with air intake port 56. Carbon dioxide capturing apparatus 1 is installed in front of air intake port 56 of air conditioning outdoor unit 55.

Air conditioning ventilation system 2 comprising carbon dioxide capturing apparatus 1 is also applicable to gas 43 having a lower pressure and can also be further reduced in size. Further, by installing carbon dioxide capturing apparatus 1 in front of air intake port 56 of air conditioning outdoor unit 55, gas 43 can be introduced into adsorption space 25 by utilizing a flow of outside air that is created by air conditioning outdoor unit 55. Carbon dioxide contained in gas 43 can be captured more efficiently. Further, even when air conditioning outdoor unit 55 is stopped and there is no air flow created by air conditioning outdoor unit 55, air blown outdoors causes gas 43 to flow into adsorption unit 20, and carbon dioxide capturing apparatus 1 can thus capture carbon dioxide contained in gas 43.

The carbon dioxide capturing method of the present embodiment comprises adsorbing carbon dioxide contained in gas 43 on adsorbent 40 by bringing adsorbent 40 into contact with gas 43 containing the carbon dioxide by allowing adsorbent 40 to fall through adsorption space 25 of adsorption unit 20 by the self-weight of adsorbent 40. Gas 43 is introduced into adsorption space 25 in a direction intersecting the direction in which adsorbent 40 falls. The carbon dioxide capturing method of the present embodiment further comprises collecting adsorbent 40 having adsorbed the carbon dioxide.

In the carbon dioxide capturing method of the present embodiment, gas 43 is introduced into adsorption space 25 in a direction intersecting the direction in which adsorbent 40 falls. Thus, gas 43 receives reduced flow resistance from adsorbent 40. The carbon dioxide capturing method of the present embodiment is also applicable to gas 43 having a lower pressure. Further, the carbon dioxide capturing method of the present embodiment allows carbon dioxide capturing apparatus 1 to be further reduced in size. Further, in the carbon dioxide capturing method of the present embodiment, adsorbent 40 falls through adsorption space 25 by the self-weight of adsorbent 40. This can eliminates the necessity of using electric power to transport adsorbent 40.

### Second Embodiment.

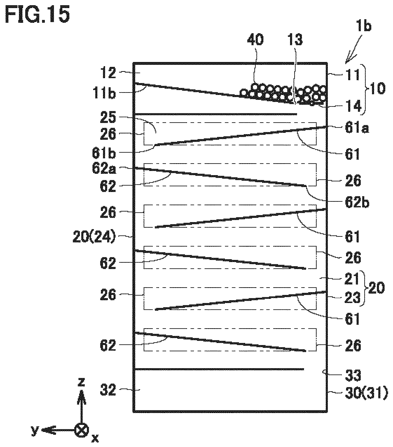

A carbon dioxide capturing apparatus 1b according to a second embodiment will now be described with reference to Figs. 15 to 17. Carbon dioxide capturing apparatus 1b of the present embodiment is similar in configuration to carbon dioxide capturing apparatus 1 of the first embodiment, except mainly for the following.

In carbon dioxide capturing apparatus 1b, storage body 11 includes an inclined bottom plate 11b. Inclined bottom plate 11b defines a bottom portion of storage body 11. Inclined bottom plate 11b gradually descends toward opening 13. When valve 14 closes opening 13, adsorbent 40 is present on inclined bottom plate 11b and valve 14.

Carbon dioxide capturing apparatus 1b further comprises a plurality of inclined plates 61 and 62. Carbon dioxide capturing apparatus 1b may include at least one inclined plate. Inclined plates 61 and 62 are disposed in adsorption space 25. Inclined plates 61 and 62 are inclined with respect to a horizontal plane (an xy plane).

Inclined plate 61 includes an end 61a and an end 61b opposite to end 61a. End 61a is fixed to adsorption unit 20 (specifically, side wall 23). End 61b is separated from adsorption unit 20 (specifically, side wall 24), and a gap is formed between end 61b and adsorption unit 20 (specifically, side wall 24). End 61a is higher in level than end 61b. A distance between end 61a and storage unit 10 is smaller than a distance between end 61b and storage unit 10. Inclined plate 62 includes an end 62a and an end 62b opposite to end 62a. End 62a is fixed to adsorption unit 20 (specifically, side wall 24). End 62b is separated from adsorption unit 20 (specifically, side wall 23), and a gap is formed between end 62b and adsorption unit 20 (specifically, side wall 23). End 62a is higher in level than end 62b. A distance between end 62a and storage unit 10 is smaller than a distance between end 62b and storage unit 10.

Adsorbent 40 rolls on inclined plates 61 and 62 by the self-weight of adsorbent 40. As such, adsorbent 40 can have a larger surface area to come into contact with gas 43. Adsorbent 40 comes into contact with gas 43 for an increased period of time. More carbon dioxide is adsorbed by adsorbent 40. Adsorbent 40 may have any shape that allows the adsorbent to roll on inclined plates 61 and 62, and the adsorbent has a spherical shape or a cylindrical shape for example.

An operation of carbon dioxide capturing apparatus 1b and a carbon dioxide capturing method according to the present embodiment will now be described with reference to Figs. 15 to 17.

As shown in Fig. 15, valve 14 closes opening 13. As in the step shown in Figs. 1 and 2 according to the first embodiment, adsorbent 40 is stored in storage unit 10. Adsorbent 40 is present on inclined bottom plate 11b and valve 14.

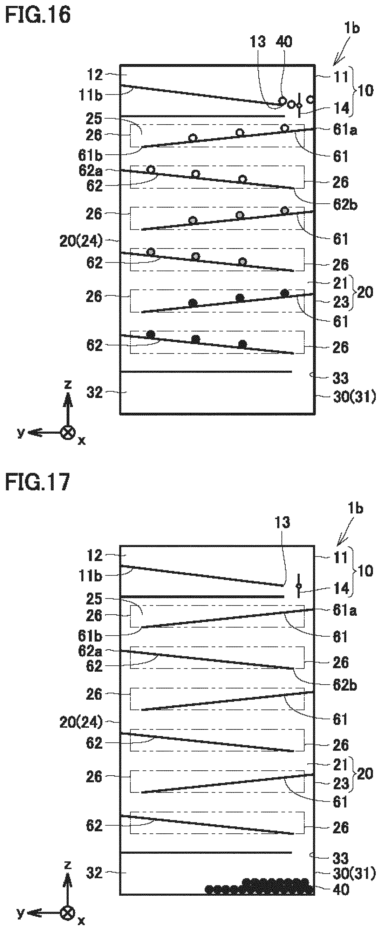

As shown in Fig. 16, valve 14 opens opening 13. Adsorbent 40 falls toward adsorption space 25 of adsorption unit 20 by the self-weight of adsorbent 40. In adsorption unit 20, adsorbent 40 falls toward collection unit 30 while rolling on inclined plates 61 and 62 by the self-weight of adsorbent 40. Specifically, adsorbent 40 rolls on inclined plate 61 toward end 61b by the self-weight of adsorbent 40. Adsorbent 40 falls onto inclined plate 62 through the gap between end 61b and adsorption unit 20 (specifically, side wall 24) by the self-weight of adsorbent 40. Adsorbent 40 rolls on inclined plate 62 toward end 62b by the self-weight of adsorbent 40. Adsorbent 40 falls onto inclined plate 61 through the gap between end 62b and adsorption unit 20 (specifically, side wall 23) by the self-weight of adsorbent 40.

Gas 43 is introduced through opening 26 into adsorption space 25 in a direction (e.g., the + x direction) intersecting the direction in which adsorbent 40 falls (e.g., the - z direction). Adsorbent 40 in adsorption space 25 comes into contact with gas 43 while rolling on inclined plates 61 and 62 and adsorbs carbon dioxide contained in gas 43. Gas 43 having carbon dioxide removed by adsorbent 40 flows out of adsorption space 25 through opening 27 (see Figs. 2, 4 and 6).

Adsorbent 40 having adsorbed carbon dioxide contained in gas 43 falls from one of inclined plates 61 and 62 closest to collection unit 30 (i.e., inclined plate 62) toward collection unit 30 by the self-weight of adsorbent 40. Specifically, the adsorbent falls toward collection unit 30 through a gap formed between one of inclined plates 61 and 62 closest to collection unit 30 (e.g., inclined plate 62) and adsorption unit 20 (e.g., side wall 23). As shown in Fig. 17, adsorbent 40 having adsorbed carbon dioxide passes through opening 33 and is accommodated in collection space 32 of collection unit 30. Adsorbent 40 having adsorbed carbon dioxide is collected in collection unit 30.

Carbon dioxide capturing apparatus 1b and the carbon dioxide capturing method according to the present embodiment have the following effects in addition to the effects of carbon dioxide capturing apparatus 1 and the carbon dioxide capturing method according to the first embodiment.

Carbon dioxide capturing apparatus 1b of the present embodiment further comprises at least one inclined plate (e.g., inclined plates 61 and 62) disposed in adsorption space 25 and inclined with respect to a horizontal plane. Adsorbent 40 rolls on at least one inclined plate by the self-weight of adsorbent 40.

Adsorbent 40 rolling on at least one inclined plate (e.g., inclined plates 61 and 62) has an increased surface area to come into contact with gas 43 containing carbon dioxide. More carbon dioxide can be adsorbed by adsorbent 40 in a shorter period of time. Carbon dioxide can be captured more efficiently. Carbon dioxide capturing apparatus 1b can be reduced in size.

In carbon dioxide capturing apparatus 1b of the present embodiment, at least one inclined plate (e.g., inclined plate 61) includes a first end (e.g., end 61a) fixed to adsorption unit 20 and a second end (e.g., end 61b) opposite to the first end. A first distance between the first end and storage unit 10 is smaller than a second distance between the second end and storage unit 10.

Therefore, adsorbent 40 rolls on at least one inclined plate (e.g., inclined plate 61). Adsorbent 40 has an increased surface area to come into contact with gas 43 containing carbon dioxide. More carbon dioxide can be adsorbed by adsorbent 40 in a shorter period of time. Carbon dioxide can be captured more efficiently. Carbon dioxide capturing apparatus 1b can be reduced in size.

In carbon dioxide capturing apparatus 1b of the present embodiment, at least one inclined plate is a plurality of inclined plates (e.g., inclined plates 61 and 62).

Therefore, adsorbent 40 has a further increased surface area to come into contact with gas 43 containing carbon dioxide. Adsorbent 40 comes into contact with gas 43 for an increased period of time. More carbon dioxide can be adsorbed by adsorbent 40. Carbon dioxide can be captured more efficiently.

In carbon dioxide capturing apparatus 1b of the present embodiment, adsorbent 40 has a spherical shape or a cylindrical shape.

Therefore, adsorbent 40 rolls on at least one inclined plate (e.g., inclined plates 61 and 62). Adsorbent 40 has an increased surface area to come into contact with gas 43 containing carbon dioxide. More carbon dioxide can be adsorbed by adsorbent 40 in a shorter period of time. Carbon dioxide can be captured more efficiently.

In the carbon dioxide capturing method of the present embodiment, allowing adsorbent 40 to fall by the self-weight of adsorbent 40 includes rolling adsorbent 40 on at least one inclined plate (e.g., inclined plates 61 and 62) disposed in adsorption space 25 and inclined with respect to a horizontal plane.

Adsorbent 40 rolling on at least one inclined plate (e.g., inclined plates 61 and 62) has an increased surface area to come into contact with gas 43 containing carbon dioxide. More carbon dioxide can be adsorbed by adsorbent 40 in a shorter period of time. The carbon dioxide capturing method of the present embodiment allows carbon dioxide to be captured more efficiently and allows carbon dioxide capturing apparatus 1b to be reduced in size.

### Third Embodiment.

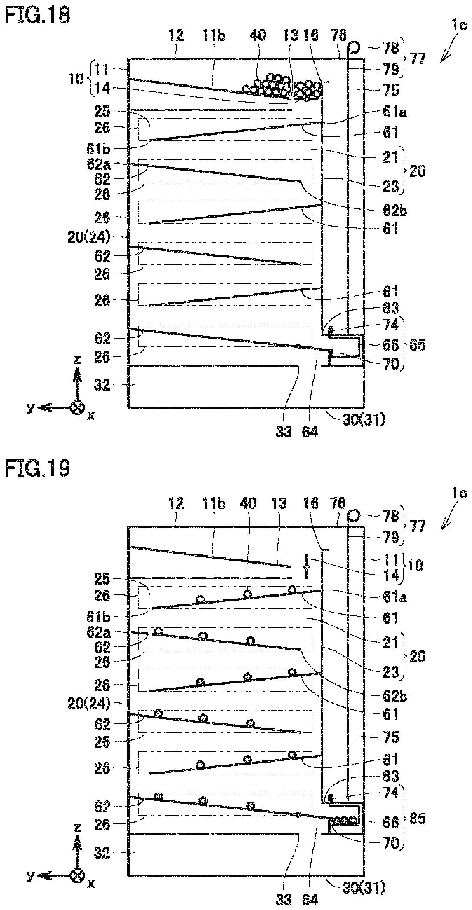

A carbon dioxide capturing apparatus 1c according to a third embodiment will now be described with reference to Figs. 18 to 25. Carbon dioxide capturing apparatus 1c of the present embodiment is similar in configuration to carbon dioxide capturing apparatus 1b of the second embodiment, except mainly for the following.

As shown in Figs. 18, 19, 22, and 25, in carbon dioxide capturing apparatus 1c, storage unit 10 is provided with an opening 16. Opening 16 communicates with storage space 12 and a passage 75 for a transport container 65. Adsorption unit 20 is provided with an opening 63 communicating with adsorption space 25 and passage 75 for transport container 65. Opening 63 faces a lower end of one of inclined plates 61 and 62 closest to collection unit 30 (e.g., end 62b of inclined plate 62).

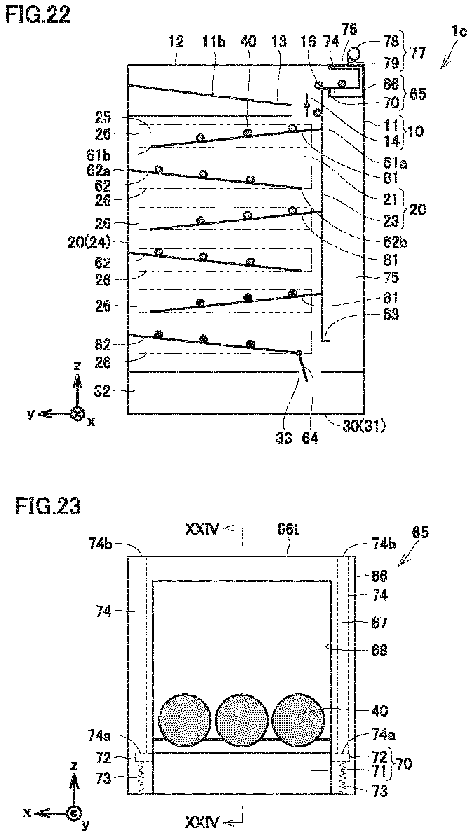

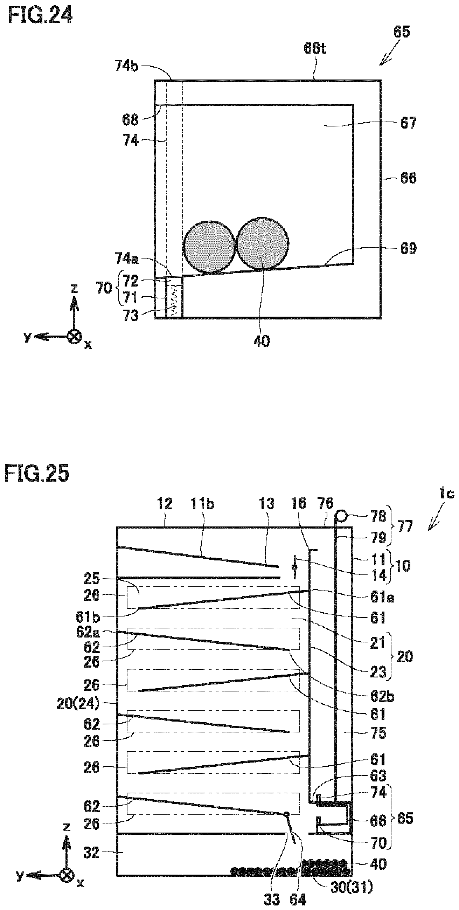

Adsorption unit 20 includes a valve 64. Valve 64 is provided at the lower end of one of inclined plates 61 and 62 closest to collection unit 30 (e.g., end 62b of inclined plate 62). Valve 64 is switchable between a first valve position (see Figs. 18 and 19) and a second valve position (see Figs. 22 and 25). As shown in Figs. 18 and 19, when valve 64 is in the first valve position, valve 64 guides adsorbent 40 to opening 63 and hence transport container 65. As shown in Figs. 22 and 25, when valve 64 is in the second valve position, valve 64 guides adsorbent 40 to opening 33 and hence collection unit 30.

As shown in Figs. 18 to 25, carbon dioxide capturing apparatus 1c further comprises transport container 65 and a driving device 77. In order to reuse adsorbent 40 having adsorbed carbon dioxide, transport container 65 and driving device 77 transport adsorbent 40 having adsorbed carbon dioxide from adsorption unit 20 to storage unit 10.

Transport container 65 includes a car 66 and a shutter 70. Transport container 65 may further include a spring 73 and an operation rod 74.

Car 66 has a top surface 66t. Car 66 is internally provided with an accommodation space 67 to accommodate adsorbent 40. Car 66 is provided with an opening 68 communicating with accommodation space 67. Car 66 includes an inclined bottom surface 69 defining a bottom surface of accommodation space 67. Inclined bottom surface 69 gradually descends toward opening 68.

Shutter 70 includes a shutter body 71 and a projection 72 projecting from shutter body 71. The shutter (specifically, shutter body 71) opens and closes a portion of opening 68 of car 66.

Specifically, spring 73 and operation rod 74 are connected to projection 72. Spring 73 biases shutter 70 upward. Operation rod 74 includes a lower end 74a and an upper end 74b opposite to lower end 74a. Operation rod 74 has lower end 74a coupled to projection 72.

As shown in Figs. 18 and 19, when transport container 65 is in the first position, top surface 66t of car 66 is away from a ceiling 76 of passage 75 for transport container 65. As shown in Figs. 18 to 21, shutter 70 is biased upward by spring 73. Therefore, shutter 70 (specifically, shutter body 71) closes a portion of opening 68 of car 66. Upper end 74b of operation rod 74 projects from top surface 66t of car 66.

In contrast, when transport container 65 is in the second position as shown in Fig. 22, top surface 66t of car 66 comes into contact with ceiling 76 of passage 75 for transport container 65. As shown in Figs. 22 to 24, operation rod 74 moves downward against the biasing force of spring 73. Upper end 74b of operation rod 74 is flush with top surface 66t of car 66. Spring 73 is compressed. Shutter 70 (specifically, shutter body 71) opens openings 68 of car 66 entirely.

Transport container 65 is driven by driving device 77 to move through passage 75. In the present embodiment, driving device 77 moves transport container 65 between the first position and the second position. As shown in Figs. 18 and 19, when transport container 65 is in the first position, transport container 65 faces adsorption unit 20 (e.g., opening 63). When transport container 65 is in the second position, as shown in Fig. 22, transport container 65 faces storage unit 10 (e.g., opening 16). Specifically, driving device 77 includes a hoisting machine 78 and a rope 79. Rope 79 is connected to transport container 65 (specifically, car 66) and hoisting machine 78. Transport container 65 ascends from adsorption unit 20 to storage unit 10 or descends from storage unit 10 to adsorption unit 20 by using hoisting machine 78 and rope 79.

An operation of carbon dioxide capturing apparatus 1c and a carbon dioxide capturing method according to the present embodiment will now be described with reference to Figs. 18 to 25.

As shown in Fig. 18, valve 14 closes opening 13. As in the step shown in Fig. 15 according to the second embodiment, adsorbent 40 is stored in storage unit 10.

As shown in Fig. 19, valve 14 opens opening 13. As in the step shown in Fig. 16 according to the second embodiment, adsorbent 40 falls toward adsorption space 25 of adsorption unit 20 by the self-weight of adsorbent 40. In adsorption unit 20, adsorbent 40 falls toward collection unit 30 while rolling on inclined plates 61 and 62 by the self-weight of adsorbent 40. Adsorbent 40 in adsorption space 25 comes into contact with gas 43 while rolling on inclined plates 61 and 62 and adsorbs carbon dioxide contained in gas 43.

As shown in Fig. 19, when transport container 65 is in the first position, adsorbent 40 having fallen through adsorption space 25 is accommodated in transport container 65. Specifically, transport container 65 is in the first position and faces adsorption unit 20 (e.g., opening 63). Valve 64 is in the first valve position and guides adsorbent 40 to opening 63 and hence transport container 65. Adsorbent 40 having adsorbed carbon dioxide rolls on valve 64, passes through opening 63, and is accommodated in accommodation space 67 of car 66. When transport container 65 is in the first position, shutter 70 (specifically, shutter body 71) closes a portion of opening 68 of car 66 as shown in Figs. 19 to 21. Therefore, adsorbent 40 accommodated in accommodation space 67 of car 66 remains in accommodation space 67 of car 66.

As shown in Fig. 22, driving device 77 is operated to move transport container 65 from the first position (see Figs. 18 and 19) to the second position (see Fig. 22). Specifically, hoisting machine 78 is used to wind rope 79. Transport container 65 connected to rope 79 moves from the first position to the second position.

As shown in Fig. 22, when transport container 65 is in the second position, adsorbent 40 is supplied from transport container 65 to storage unit 10. Specifically, when transport container 65 is in the second position, transport container 65 faces opening 16, and top surface 66t of car 66 comes into contact with ceiling 76 of passage 75 for transport container 65. Upper end 74b of operation rod 74 comes into contact with ceiling 76, and operation rod 74 moves downward against the biasing force of spring 73. Upper end 74b of operation rod 74 is flush with top surface 66t of car 66. Shutter 70 coupled to operation rod 74 also moves downward. Shutter 70 (specifically, shutter body 71) opens opening 68 of car 66 entirely. Adsorbent 40 moves along inclined bottom surface 69. For example, adsorbent 40 rolls on inclined bottom surface 69 by the self-weight of adsorbent 40. Adsorbent 40 moves from accommodation space 67 of car 66 through opening 16 to storage space 12 of storage unit 10. Valve 14 opens opening 13. Adsorbent 40 is supplied to adsorption space 25 of adsorption unit 20 through opening 13.

Adsorbent 40 again rolls on inclined plates 61 and 62 by the self-weight of adsorbent 40. Adsorbent 40 in adsorption space 25 again comes into contact with gas 43 while rolling on inclined plates 61 and 62 and adsorbs carbon dioxide contained in gas 43. The steps shown in Figs. 18, 19, and 22 are repeated until adsorbent 40 sufficiently adsorbs carbon dioxide. Adsorbent 40 is reused to remove carbon dioxide contained in gas 43.

Once adsorbent 40 has sufficiently adsorbed carbon dioxide and has a reduced ability to adsorb carbon dioxide, then, as shown in Figs. 22 and 25, valve 64 is switched from the first valve position (see Figs. 18 and 19) to the second valve position. When valve 64 is in the second valve position, valve 64 guides adsorbent 40 to opening 33 and hence collection unit 30. Adsorbent 40 having adsorbed carbon dioxide falls from one of inclined plates 61 and 62 closest to collection unit 30 (i.e., inclined plate 62) toward collection unit 30 by the self-weight of adsorbent 40. As shown in Fig. 25, adsorbent 40 having adsorbed carbon dioxide passes through opening 33 and is accommodated in collection space 32 of collection unit 30. Adsorbent 40 having adsorbed carbon dioxide is collected in collection unit 30.

Carbon dioxide capturing apparatus 1c and the carbon dioxide capturing method according to the present embodiment have the following effects in addition to the effects of carbon dioxide capturing apparatus 1b and the carbon dioxide capturing method according to the second embodiment.

Carbon dioxide capturing apparatus 1c of the present embodiment further comprises transport container 65 and driving device 77. Driving device 77 moves transport container 65 from a first position facing adsorption unit 20 to a second position facing storage unit 10. When transport container 65 is in the first position, adsorbent 40 that has fallen through adsorption space 25 is accommodated in transport container 65. When transport container 65 is in the second position, adsorbent 40 is supplied from transport container 65 to storage unit 10.

Adsorbent 40 can thus be repeatedly used to remove carbon dioxide contained in gas 43. Carbon dioxide can be captured more efficiently. Further, reusing adsorbent 40 allows adsorption unit 20 to be reduced in size (in the direction in which adsorbent 40 falls (i.e., the - z direction), in particular). Carbon dioxide capturing apparatus 1c can be reduced in size.

In carbon dioxide capturing apparatus 1c of the present embodiment, adsorption unit 20 includes a second valve (valve 64). Adsorption unit 20 is provided with a second opening (opening 63) communicating with adsorption space 25. When transport container 65 is in the first position, transport container 65 faces the second opening. The second valve is switchable between the first valve position and the second valve position. When the second valve is in the first valve position, the second valve guides adsorbent 40 to the second opening. When the second valve is in the second valve position, the second valve guides adsorbent 40 to collection unit 30.

This allows adsorbent 40 to adsorb as much carbon dioxide as possible so that subsequently adsorbent 40 having sufficiently adsorbed carbon dioxide can be supplied to collection unit 30. Carbon dioxide can be captured more efficiently.

The carbon dioxide capturing method according to the present embodiment further comprises adsorbing the carbon dioxide contained in gas 43 on adsorbent 40 having adsorbed the carbon dioxide by bringing adsorbent 40 having adsorbed the carbon dioxide into contact with gas 43 by allowing adsorbent 40 having adsorbed the carbon dioxide to fall through adsorption space 25 by the self-weight of adsorbent 40.

Adsorbent 40 can thus be repeatedly used to remove carbon dioxide contained in gas 43. Carbon dioxide can be captured more efficiently. Further, reusing adsorbent 40 allows adsorption unit 20 to be reduced in size (in the direction in which adsorbent 40 falls (i.e., the - z direction), in particular). Carbon dioxide capturing apparatus 1c can be reduced in size.

### Fourth Embodiment.

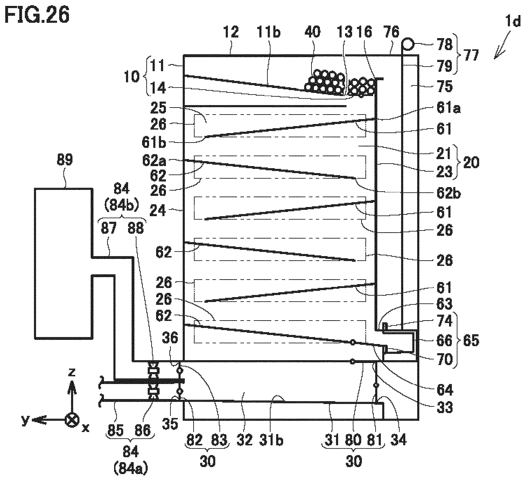

A carbon dioxide capturing apparatus 1d according to a fourth embodiment will now be described with reference to Figs. 26 to 33. Carbon dioxide capturing apparatus 1d of the present embodiment is similar in configuration to carbon dioxide capturing apparatus 1c of the third embodiment, except mainly for the following.

Collection unit 30 is further provided with openings 34, 35 and 36. Opening 34 communicates with collection space 32 and passage 75 for transport container 65. Openings 35 and 36 each communicate with collection space 32. Collection unit 30 further includes valves 80, 81, 82, and 83. Valve 80 opens and closes opening 33. Valve 81 opens and closes opening 34. Valve 82 opens and closes opening 35. Valve 83 opens and closes opening 36. Collection unit 30 includes an inclined bottom surface 31b. Inclined bottom surface 31b gradually descends toward opening 34.

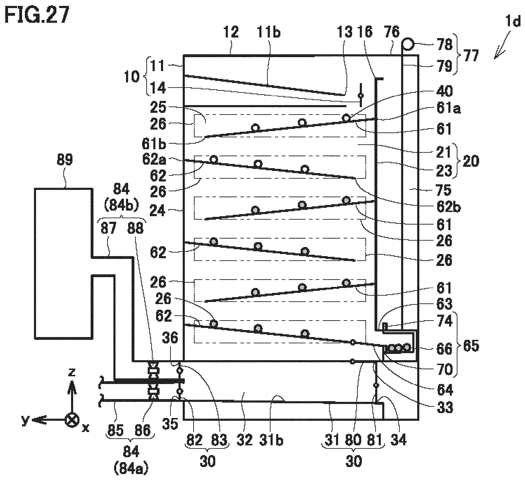

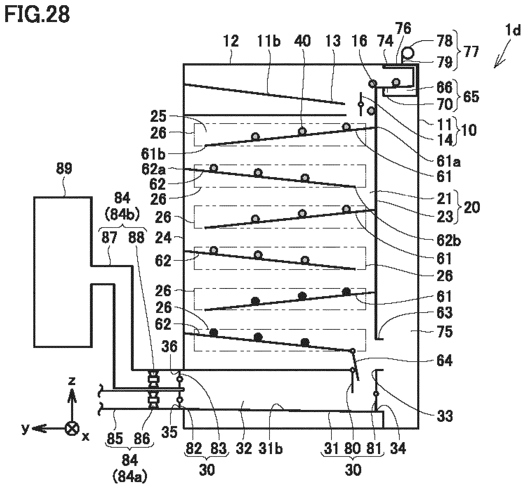

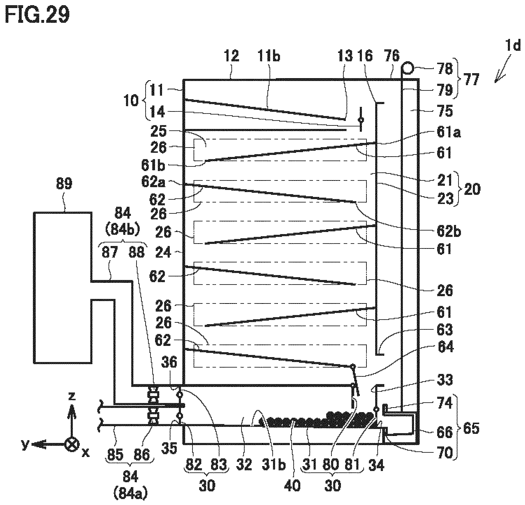

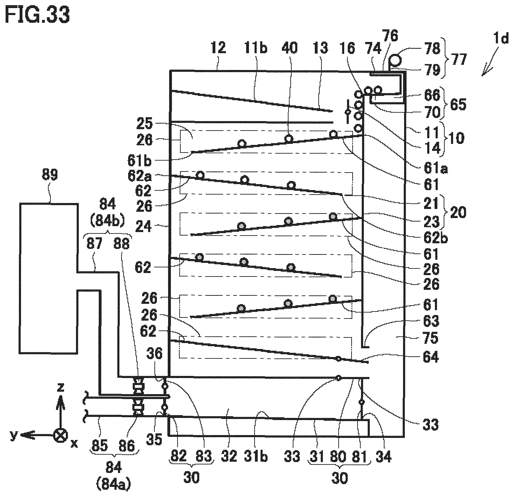

Driving device 77 can also move transport container 65 to a third position (see Figs. 29 to 32). Driving device 77 moves transport container 65 between the first position (see Figs. 26 and 27), the second position (see Figs. 28 and 33), and the third position (see Figs. 29 to 32). When transport container 65 is in the third position, transport container 65 faces collection unit 30 (specifically, opening 34). When transport container 65 is in the third position and valve 81 opens opening 34, adsorbent 40 is supplied from collection unit 30 to transport container 65.

Carbon dioxide capturing apparatus 1d further comprises a carbon dioxide separation device 84. Carbon dioxide separation device 84 separates carbon dioxide from adsorbent 40 by applying heat, pressure, or the like to adsorbent 40 accommodated in collection space 32. In the present embodiment, carbon dioxide separation device 84 applies heat to adsorbent 40 to separate carbon dioxide from adsorbent 40, and includes, for example, a heating device 84a and an exhaust device 84b.

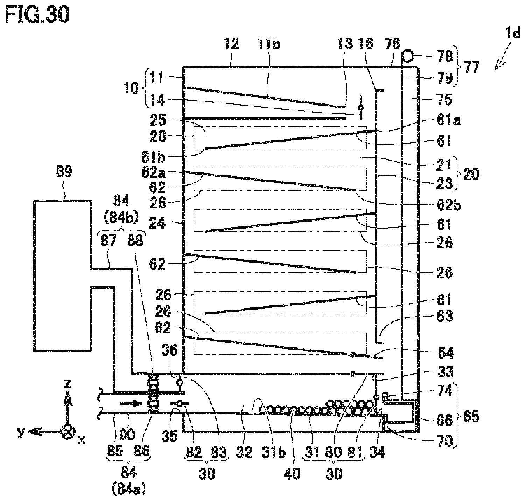

Heating device 84a heats adsorbent 40 accommodated in collection space 32. Specifically, heating device 84a includes a pipe 85 and an air supply blower 86. Pipe 85 is connected to collection unit 30 and communicates with opening 35. As shown in Fig. 30, air supply blower 86 supplies heated air 90 from pipe 85 through opening 35 to collection space 32 of collection unit 30. Adsorbent 40 accommodated in collection space 32 and having adsorbed carbon dioxide is heated by heated air 90. Carbon dioxide adsorbed by adsorbent 40 is separated from adsorbent 40.

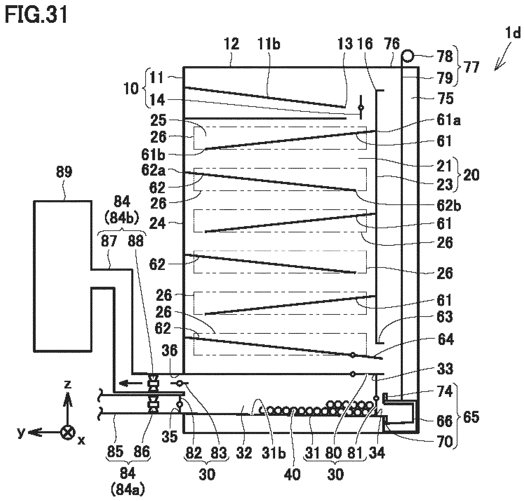

Exhaust device 84b exhausts from collection space 32 the carbon dioxide separated from the heated adsorbent 40. Specifically, exhaust device 84b includes a pipe 87 and an exhaust blower 88. Pipe 87 is connected to collection unit 30 and communicates with opening 36. As shown in Fig. 31, exhaust blower 88 exhausts the carbon dioxide separated from adsorbent 40 from collection space 32 of collection unit 30 to pipe 87 through opening 36. A cylinder 89 is connected to pipe 87. The carbon dioxide separated from adsorbent 40 is stored in cylinder 89.

An operation of carbon dioxide capturing apparatus 1d and the carbon dioxide capturing method according to the present embodiment will now be described with reference to Figs. 26 to 33.

As shown in Fig. 26, valve 14 closes opening 13. As in the step shown in Fig. 18 according to the third embodiment, adsorbent 40 is stored in storage unit 10.

As shown in Fig. 27, valve 14 opens opening 13. As in the step shown in Fig. 19 according to the third embodiment, adsorbent 40 falls toward adsorption space 25 of adsorption unit 20 by the self-weight of adsorbent 40. In adsorption unit 20, adsorbent 40 falls toward collection unit 30 while rolling on inclined plates 61 and 62 by the self-weight of adsorbent 40. Adsorbent 40 in adsorption space 25 comes into contact with gas 43 while rolling on inclined plates 61 and 62 and adsorbs carbon dioxide contained in gas 43.

As shown in Fig. 27, as in the step shown in Fig. 19 according to the third embodiment, transport container 65 is in the first position, and valve 64 is in the first valve position. Adsorbent 40 having adsorbed carbon dioxide rolls on valve 64 and is accommodated in accommodation space 67 of car 66 through opening 63.

As shown in Fig. 28, as in the step shown in Fig. 22 according to the third embodiment, driving device 77 is operated to move transport container 65 from the first position (see Figs. 26 and 27) to the second position (see Fig. 28). When transport container 65 is in the second position, shutter 70 opens opening 68 of car 66 entirely. Adsorbent 40 moves along inclined bottom surface 69. Adsorbent 40 moves from accommodation space 67 of car 66 through opening 16 to storage space 12 of storage unit 10.

Valve 14 opens opening 13. Adsorbent 40 is supplied to adsorption space 25 of adsorption unit 20 through opening 13. Adsorbent 40 again rolls on inclined plates 61 and 62 by the self-weight of adsorbent 40. Adsorbent 40 in adsorption space 25 again comes into contact with gas 43 while rolling on inclined plates 61 and 62 and adsorbs carbon dioxide contained in gas 43. The steps shown in Figs. 26 to 28 are repeated until adsorbent 40 sufficiently adsorbs carbon dioxide. Adsorbent 40 is reused to remove carbon dioxide contained in gas 43.

Once adsorbent 40 has sufficiently adsorbed carbon dioxide and has a reduced ability to adsorb carbon dioxide, then, as in the steps shown in Figs. 22 and 25 according to the third embodiment, valve 64 is switched from the first valve position (see Figs. 26 and 27) to the second valve position (see Figs. 28 and 29). As shown in Figs. 28 and 29, when valve 64 is in the second valve position, valve 64 guides adsorbent 40 to opening 33 and hence collection unit 30. Valve 80 opens opening 33. Adsorbent 40 having adsorbed carbon dioxide falls from one of inclined plates 61 and 62 closest to collection unit 30 (i.e., inclined plate 62) toward collection unit 30 by the self-weight of adsorbent 40. As shown in Fig. 29, adsorbent 40 having adsorbed carbon dioxide passes through opening 33 and is accommodated in collection space 32 of collection unit 30. Adsorbent 40 having adsorbed carbon dioxide is collected in collection unit 30.

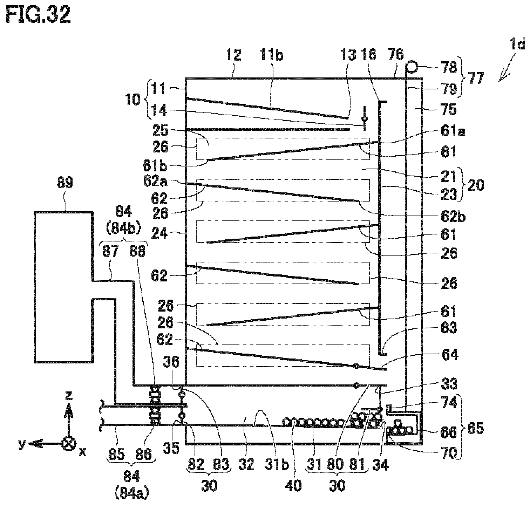

As shown in Fig. 29, driving device 77 is operated to move transport container 65 from the second position (see Figs. 27 and 28) to the third position (see Figs. 29 to 32). When transport container 65 is in the third position, transport container 65 faces collection unit 30 (specifically, opening 34). Note that transport container 65 may be moved from the second position to the third position before valve 81 opens opening 34 as shown in Fig. 32.

Carbon dioxide separation device 84 is used to separate carbon dioxide from adsorbent 40 accommodated in collection space 32. For example, as shown in Fig. 30, heating device 84a is used to heat adsorbent 40 accommodated in collection space 32 and also having adsorbed carbon dioxide. Specifically, valve 80 closes opening 33. To avoid valve 64 interfering with valve 80, valve 64 may be switched from the second valve position (see Figs. 28 and 29) to the first valve position (see Figs. 26, 27 and 30). Valve 81 closes opening 34. Valve 83 closes opening 36. Valve 82 opens opening 35. Air supply blower 86 supplies heated air 90 from pipe 85 through opening 35 to collection space 32 of collection unit 30. Adsorbent 40 accommodated in collection space 32 and also having adsorbed carbon dioxide is heated by heated air 90. The carbon dioxide adsorbed in adsorbent 40 is separated from adsorbent 40.

As shown in Fig. 31, the carbon dioxide separated from the heated adsorbent 40 is exhausted from collection space 32 using exhaust device 84b. Specifically, valve 80 keeps opening 33 closed. Valve 81 keeps opening 34 closed. Valve 82 closes opening 35. Valve 83 opens opening 36. Exhaust blower 88 exhausts the carbon dioxide that is separated from adsorbent 40 from collection space 32 of collection unit 30 to pipe 87 through opening 36. Cylinder 89 is connected to pipe 87. The carbon dioxide separated from adsorbent 40 is captured in cylinder 89. Adsorbent 40 having carbon dioxide separated therefrom remains in collection space 32 of collection unit 30.

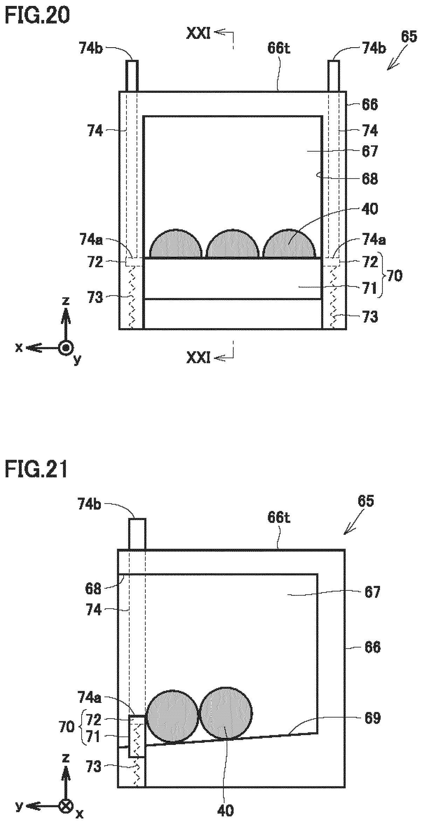

As shown in Fig. 32, valve 83 closes opening 36. Valve 81 opens opening 34. Adsorbent 40 having carbon dioxide separated therefrom moves along inclined bottom surface 31b. For example, adsorbent 40 rolls on inclined bottom surface 31b by the self-weight of adsorbent 40. Adsorbent 40 is accommodated in accommodation space 67 of car 66 from collection space 32 of collection unit 30 through opening 34. When transport container 65 is in the third position, as well as when transport container 65 is in the first position, as shown in Figs. 20, 21 and 32, top surface 66t of car 66 and upper end 74b of operation rod 74 are away from ceiling 76 of passage 75 for transport container 65. Therefore, when transport container 65 is in the third position, shutter 70 closes a portion of opening 68 of car 66. Therefore, adsorbent 40 accommodated in accommodation space 67 of car 66 remains in accommodation space 67 of car 66.

Driving device 77 is operated to move transport container 65 from the third position (see Fig. 32) to the second position (see Fig. 33). Specifically, hoisting machine 78 is used to wind rope 79. Transport container 65 connected to rope 79 moves from the third position to the second position.

When transport container 65 is in the second position, as shown in Figs. 23, 24 and 33, shutter 70 opens opening 68 of car 66 entirely. Adsorbent 40 moves along inclined bottom surface 69. For example, adsorbent 40 rolls on inclined bottom surface 69 by the self-weight of adsorbent 40. Adsorbent 40 moves from accommodation space 67 of car 66 through opening 16 to storage space 12 of storage unit 10. As shown in Fig. 33, valve 14 opens opening 13. Adsorbent 40 is supplied to adsorption space 25 of adsorption unit 20 through opening 13. Adsorbent 40 again rolls on inclined plates 61 and 62 by the self-weight of adsorbent 40. Adsorbent 40 in adsorption space 25 again comes into contact with gas 43 while rolling on inclined plates 61 and 62 and adsorbs carbon dioxide contained in gas 43. Thus, adsorbent 40 is reused to remove carbon dioxide contained in gas 43.

### (Exemplary Variation)

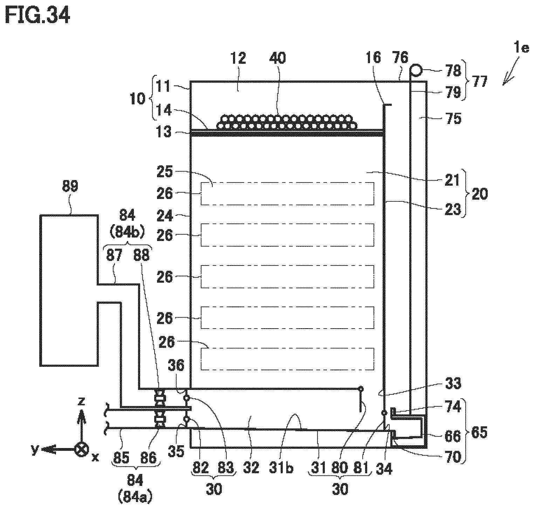

As shown in Figs. 34 to 40, a carbon dioxide capturing apparatus 1e of an exemplary variation of the present embodiment, as well as carbon dioxide capturing apparatus 1 of the first embodiment shown in Fig. 1 to Fig. 6, may not comprise inclined plates 61 and 62, and may comprise adsorption unit 20 without opening 63. Further, in carbon dioxide capturing apparatus 1e according to the exemplary variation of the present embodiment, storage unit 10 may include valve 14 of carbon dioxide capturing apparatus 1 according to the first embodiment.

An operation of carbon dioxide capturing apparatus 1e and a carbon dioxide capturing method according to the exemplary variation of the present embodiment will now be described with reference to Figs. 34 to 40. The operation of carbon dioxide capturing apparatus 1e and the carbon dioxide capturing method of the exemplary variation of the present embodiment are similar to the operation of carbon dioxide capturing apparatus 1d and the carbon dioxide capturing method of the present embodiment.

As shown in Fig. 34, valve 14 closes opening 13. As in the step shown in Figs. 1 and 2 according to the first embodiment, adsorbent 40 is stored in storage unit 10.

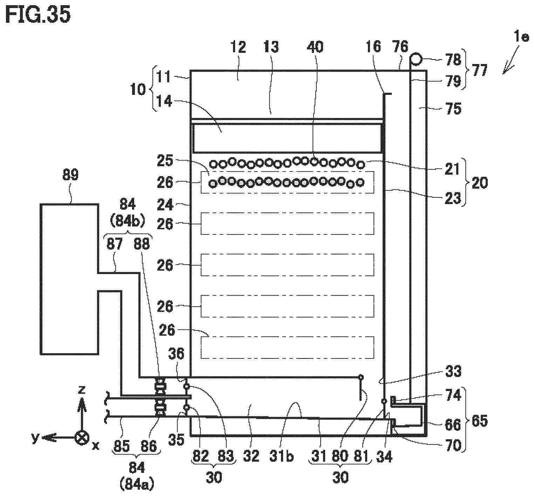

As shown in Fig. 35, valve 14 opens opening 13. As in the step shown in Figs. 3 and 4 according to the first embodiment, adsorbent 40 falls toward adsorption space 25 of adsorption unit 20 by the self-weight of adsorbent 40. In adsorption unit 20, adsorbent 40 falls from storage unit 10 through adsorption space 25 toward collection unit 30 by the self-weight of adsorbent 40. Gas 43 is introduced through opening 26 into adsorption space 25 in a direction (e.g., the + x direction) intersecting the direction in which adsorbent 40 falls (e.g., the - z direction). Adsorbent 40 in adsorption space 25 comes into contact with gas 43 and adsorbs carbon dioxide contained in gas 43. Gas 43 having carbon dioxide removed by adsorbent 40 flows out of adsorption space 25 through opening 27 (see Figs. 2, 4, and 6).

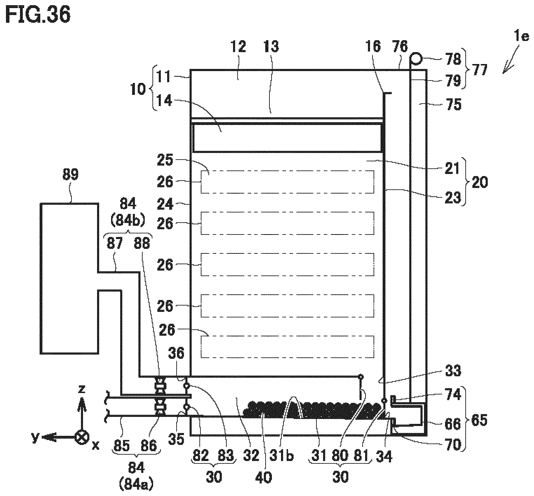

Adsorbent 40 having adsorbed carbon dioxide contained in gas 43 falls from adsorption unit 20 toward collection unit 30 by the self-weight of adsorbent 40. As shown in Fig. 36, adsorbent 40 having adsorbed carbon dioxide passes through opening 33 and is accommodated in collection space 32 of collection unit 30. Adsorbent 40 having adsorbed carbon dioxide is collected in collection unit 30.

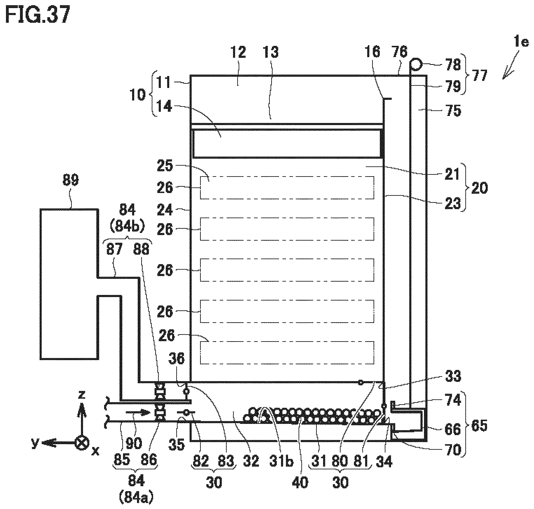

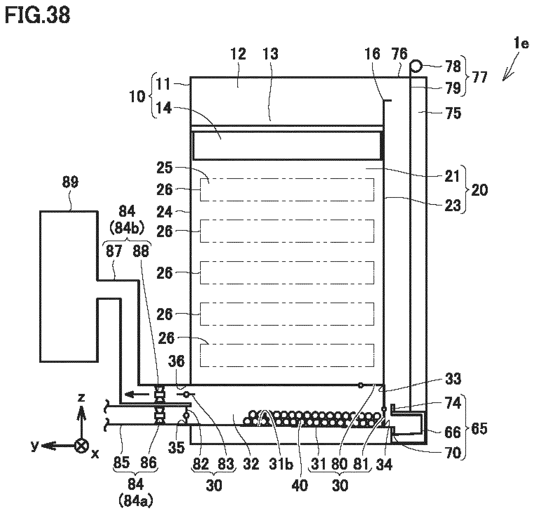

Carbon dioxide separation device 84 is used to separate carbon dioxide from adsorbent 40 accommodated in collection space 32. For example, as shown in Fig. 37, as in the step shown in Fig. 30 according to the present embodiment, adsorbent 40 having adsorbed carbon dioxide is heated to separate carbon dioxide from adsorbent 40 having adsorbed carbon dioxide. As shown in Fig. 38, as in the step shown in Fig. 31 according to the present embodiment, the carbon dioxide separated from the heated adsorbent 40 is exhausted from collection space 32 using exhaust device 84b. The carbon dioxide separated from adsorbent 40 is captured in cylinder 89.

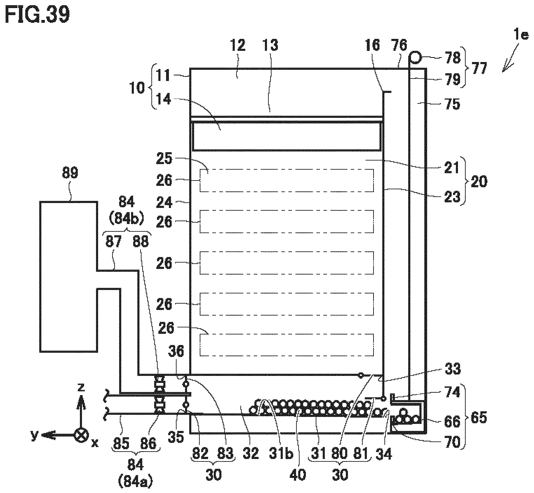

As shown in Fig. 39, as in the step shown in Fig. 32 according to the present embodiment, valve 81 opens opening 34, and adsorbent 40 having carbon dioxide separated therefrom is moved from collection space 32 of collection unit 30 to accommodation space 67 of car 66. Adsorbent 40 having carbon dioxide separated therefrom is accommodated in accommodation space 67 of car 66.

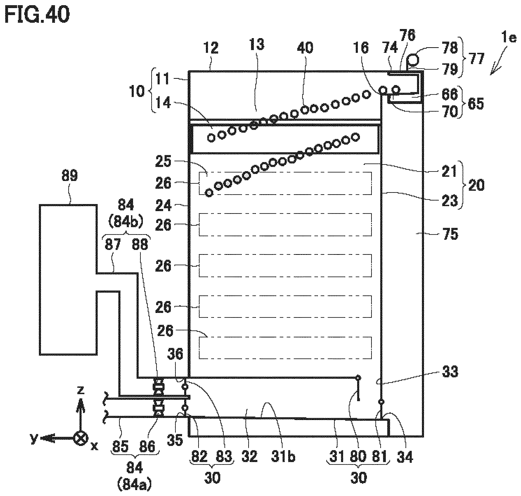

As shown in Fig. 40, as in the step shown in Fig. 33 according to the present embodiment, driving device 77 is operated to move transport container 65 from the third position (see Fig. 39) to the second position (see Fig. 40). When transport container 65 is in the second position, shutter 70 opens opening 68 of car 66 entirely. Adsorbent 40 moves from accommodation space 67 of car 66 through opening 16 to storage space 12 of storage unit 10. Valve 14 opens opening 13. Adsorbent 40 is supplied to adsorption space 25 of adsorption unit 20 through opening 13. Adsorbent 40 falls from storage unit 10 through adsorption space 25 toward collection unit 30 by the self-weight of adsorbent 40. Adsorbent 40 in adsorption space 25 again comes into contact with gas 43 and adsorbs carbon dioxide contained in gas 43. Thus, adsorbent 40 is reused to remove carbon dioxide contained in gas 43.

In another exemplary variation of the present embodiment, while carbon dioxide separation device 84 may be used to separate carbon dioxide from a portion of adsorbent 40, the remainder of adsorbent 40 may be brought into contact with gas 43 in adsorption unit 20 and thus caused to adsorb carbon dioxide contained in gas 43. The carbon dioxide separation step and the carbon dioxide adsorption step are performed in parallel, and carbon dioxide can be captured more efficiently.

Carbon dioxide capturing apparatuses 1d and 1e and the carbon dioxide capturing methods according to the present embodiment have the following effects in addition to the effects of carbon dioxide capturing apparatus 1c and the carbon dioxide capturing method according to the third embodiment.

Carbon dioxide capturing apparatuses 1d and 1e of the present embodiment further comprise carbon dioxide separation device 84, transport container 65, and driving device 77. Driving device 77 moves transport container 65 from the third position facing collection unit 30 to the second position facing storage unit 10. Collection space 32 is formed inside collection unit 30 to accommodate adsorbent 40 that has fallen through adsorption space 25. Carbon dioxide separation device 84 separates carbon dioxide from adsorbent 40 accommodated in collection space 32. When transport container 65 is in the third position, adsorbent 40 having carbon dioxide separated therefrom is accommodated in transport container 65 from collection unit 30. When transport container 65 is in the second position, adsorbent 40 is supplied from transport container 65 to storage unit 10.

Thus, adsorbent 40 having carbon dioxide separated therefrom can be reused to remove carbon dioxide contained in gas 43. Carbon dioxide can be captured more efficiently. Further, reusing adsorbent 40 allows adsorption unit 20 to be reduced in size (in the direction in which adsorbent 40 falls (i.e., the - z direction), in particular). Carbon dioxide capturing apparatuses 1d and 1e can be reduced in size.

In carbon dioxide capturing apparatuses 1d and 1e of the present embodiment, carbon dioxide separation device 84 includes heating device 84a to heat adsorbent 40 accommodated in collection space 32, and exhaust device 84b to exhaust from collection space 32 carbon dioxide separated from the heated adsorbent 40.

Thus, carbon dioxide can be efficiently separated from adsorbent 40. Adsorbent 40 having carbon dioxide separated therefrom can be reused. Carbon dioxide can be captured more efficiently.

In carbon dioxide capturing apparatuses 1d and 1e of the present embodiment, collection unit 30 is provided with a second opening (opening 34) communicating with collection space 32. When transport container 65 is in the third position, transport container 65 faces the second opening. Collection unit 30 includes a second valve (valve 81) that opens and closes the second opening.

Thus, after adsorbent 40 has carbon dioxide separated therefrom as much as possible, adsorbent 40 having carbon dioxide sufficiently separated therefrom can be supplied to storage unit 10 using transport container 65. Carbon dioxide can be captured more efficiently.

The carbon dioxide capturing method of the present embodiment further comprises: separating carbon dioxide from adsorbent 40 having adsorbed carbon dioxide; and adsorbing the carbon dioxide contained in gas 43 on adsorbent 40 having the carbon dioxide separated therefrom by bringing adsorbent 40 having the carbon dioxide separated therefrom into contact with gas 43 again by allowing adsorbent 40 having adsorbed the carbon dioxide to fall through adsorption space 25 by the self-weight of adsorbent 40.

Thus, adsorbent 40 having carbon dioxide separated therefrom can be reused to remove carbon dioxide contained in gas 43. Carbon dioxide can be captured more efficiently. Further, reusing adsorbent 40 allows adsorption unit 20 to be reduced in size (in the direction in which adsorbent 40 falls (i.e., the - z direction), in particular). The carbon dioxide capturing method of the present embodiment allows carbon dioxide capturing apparatuses 1d and 1e to be reduced in size.

In the carbon dioxide capturing method of the present embodiment, adsorbent 40 having adsorbed carbon dioxide is heated to separate carbon dioxide from adsorbent 40 having adsorbed carbon dioxide.

Thus, carbon dioxide can be efficiently separated from adsorbent 40. Adsorbent 40 having carbon dioxide separated therefrom can be reused. Carbon dioxide can be captured more efficiently.

The carbon dioxide capturing method of the present embodiment further comprises capturing carbon dioxide separated from adsorbent 40. Therefore, carbon dioxide can be captured more efficiently.

### Fifth Embodiment.

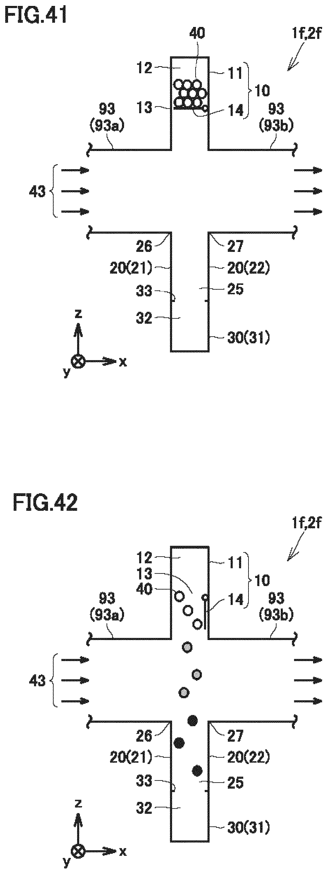

A carbon dioxide capturing apparatus 1f according to a fifth embodiment will now be described with reference to Figs. 41 to 43. Carbon dioxide capturing apparatus 1f of the present embodiment is similar in configuration to carbon dioxide capturing apparatus 1 of the first embodiment, except mainly for the following.

Carbon dioxide capturing apparatus 1f is connected to a duct 93 installed in building 50 (see Figs. 12 to 14). Duct 93 is, for example, a ventilation duct or an air conditioning duct. Carbon dioxide capturing apparatus 1f and duct 93 are included in an air conditioning ventilation system 2f of the present embodiment.

Specifically, duct 93 includes an upstream duct portion 93a and a downstream duct portion 93b. Gas 43 containing carbon dioxide flows from upstream duct portion 93a to downstream duct portion 93b. Carbon dioxide capturing apparatus 1f is disposed between upstream duct portion 93a and downstream duct portion 93b. Upstream duct portion 93a is disposed upstream of carbon dioxide capturing apparatus 1f in a direction in which gas 43 flows. Upstream duct portion 93a is connected to carbon dioxide capturing apparatus 1f and communicates with opening 26. Downstream duct portion 93b is disposed downstream of carbon dioxide capturing apparatus 1f in the direction in which gas 43 flows. Downstream duct portion 93b is connected to carbon dioxide capturing apparatus 1f and communicates with opening 27.

An operation of carbon dioxide capturing apparatus 1f and a carbon dioxide capturing method according to the present embodiment will now be described with reference to Figs. 41 to 43. The operation of carbon dioxide capturing apparatus 1f and the carbon dioxide capturing method of the present embodiment are the same as the operation of carbon dioxide capturing apparatus 1 and the carbon dioxide capturing method of the first embodiment.

As shown in Fig. 41, valve 14 closes opening 13. As in the step shown in Figs. 1 and 2 according to the first embodiment, adsorbent 40 is stored in storage unit 10.

Valve 14 opens opening 13, as shown in Fig. 42. As in the step shown in Figs. 3 and 4 according to the first embodiment, adsorbent 40 falls toward adsorption space 25 of adsorption unit 20 by the self-weight of adsorbent 40. In adsorption unit 20, adsorbent 40 falls from storage unit 10 through adsorption space 25 toward collection unit 30 by the self-weight of adsorbent 40. Gas 43 containing carbon dioxide flows from upstream duct portion 93a to downstream duct portion 93b. Gas 43 is introduced through opening 26 into adsorption space 25 in a direction (e.g., the + x direction) intersecting the direction in which adsorbent 40 falls (e.g., the - z direction). Opening 26 is an inlet for gas 43. Adsorbent 40 in adsorption space 25 comes into contact with gas 43 and adsorbs carbon dioxide contained in gas 43. Gas 43 having carbon dioxide removed by adsorbent 40 flows out of adsorption space 25 through opening 27. Opening 27 is an outlet for gas 43.

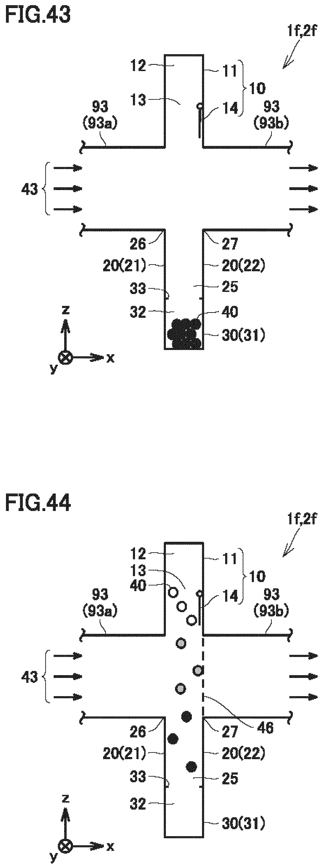

Adsorbent 40 having adsorbed carbon dioxide contained in gas 43 falls from adsorption unit 20 toward collection unit 30 by the self-weight of adsorbent 40. As shown in Fig. 43, as in the step shown in Figs. 5 and 6 according to the first embodiment, adsorbent 40 having adsorbed carbon dioxide passes through opening 33 and is accommodated in collection space 32 of collection unit 30. Adsorbent 40 having adsorbed carbon dioxide is collected in collection unit 30.

### (Exemplary Variation)

As shown in Fig. 44, in carbon dioxide capturing apparatus 1f of a first exemplary variation of the present embodiment, as well as the fifth exemplary variation (see Fig. 11) of the embodiment, adsorption unit 20 includes net 46 allowing gas 43 to pass therethrough and preventing adsorbent 40 from passing therethrough. Net 46 covers opening 27.

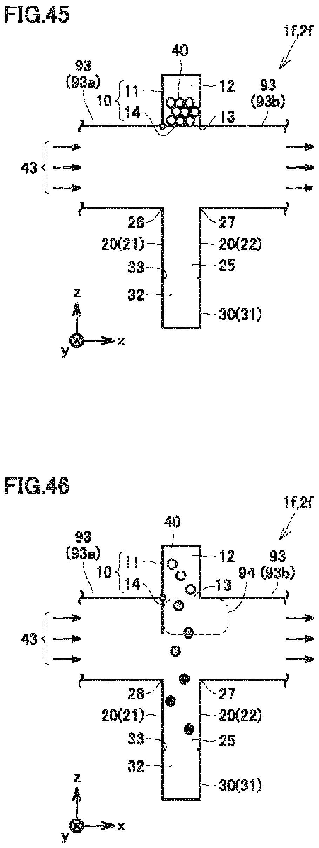

As shown in Figs. 45 and 46, in carbon dioxide capturing apparatus 1f of a second exemplary variation of the present embodiment, when valve 14 opens opening 13, valve 14 closes a portion of opening 26 that is an inlet for gas 43. Valve 14 stops a portion of a flow of gas 43 containing carbon dioxide. A negative pressure region 94 is created downstream of valve 14. A portion of adsorption space 25 becomes negative pressure region 94. Negative pressure region 94 is a region in which gas 43 is lower in pressure than it is in a region surrounding negative pressure region 94. Further, gas 43 flows at a slower velocity in negative pressure region 94 than it does in a region surrounding negative pressure region 94. This can prevent adsorbent 40 from being carried away by gas 43 and exiting adsorption unit 20 through opening 27.

Carbon dioxide capturing apparatus 1f and air conditioning ventilation system 2f of the present embodiment have the following effects in addition to the effects of carbon dioxide capturing apparatus 1 and air conditioning ventilation system 2 of the first embodiment.

In carbon dioxide capturing apparatus 1f of the present embodiment, adsorption unit 20 includes net 46 allowing gas 43 to pass therethrough and preventing adsorbent 40 from passing therethrough. Adsorption unit 20 is provided with an outlet (opening 27) through which gas 43 flows out of adsorption space 25. Net 46 covers the outlet.

Net 46 can pass gas 43 having carbon dioxide removed by adsorbent 40 and prevent adsorbent 40 from being carried away by gas 43 and exiting adsorption unit 20 through the outlet (e.g., opening 27).

In carbon dioxide capturing apparatus 1f of the present embodiment, when the first valve (valve 14) opens the first opening (opening 13), the first valve closes a portion of the inlet (opening 26).

Therefore, the first valve (valve 14) stops a portion of a flow of gas 43 containing carbon dioxide. Negative pressure region 94 is created downstream of the first valve. Adsorbent 40 can be prevented from being carried away by gas 43 and exiting adsorption unit 20.

Air conditioning ventilation system 2f of the present embodiment comprises carbon dioxide capturing apparatus 1f and duct 93 connected to carbon dioxide capturing apparatus If. Duct 93 communicates with an inlet (opening 26).

Duct 93 that communicates with the inlet (opening 26) allows a flow of gas 43 flowing through duct 93 to be utilized to introduce gas 43 into adsorption space 25. Carbon dioxide contained in gas 43 can be captured more efficiently.

It should be understood that the first to fifth embodiments and their exemplary variations disclosed herein are illustrative and non-restrictive in any respect. Insofar as there is no contradiction, at least two of the first to fifth embodiments and their exemplary variations disclosed herein may be combined together. The scope of the present disclosure is defined by the terms of the claims, rather than the above description, and is intended to encompass any modifications within the meaning and scope equivalent to the terms of the claims.

### REFERENCE SIGNS LIST

1, 1b, 1c, 1d, 1e, 1f carbon dioxide capturing apparatus, 2, 2f air conditioning ventilation system, 10 storage unit, 11 storage body, 11b inclined bottom plate, 12 storage space, 13, 16 opening, 14 valve, 20 adsorption unit, 21 front wall, 22 rear wall, 23, 24 side wall, 25 adsorption space, 26, 27, 28, 63 opening, 29 eave, 30 collection unit, 31 collection body, 31b, 69 inclined bottom surface, 32 collection space, 33, 34, 35, 36 opening, 40 adsorbent, 43 gas, 46 net, 50 building, 51 side wall, 52 rooftop, 55 air conditioning outdoor unit, 56 air intake port, 57 air exhaust port, 61, 62 inclined plate, 61a, 61b, 62a, 62b end, 64 valve, 65 transport container, 66 car, 66t top surface, 67 accommodation space, 68 opening, 70 shutter, 71 shutter body, 72 projection, 73 spring, 74 operation rod, 74a lower end, 74b upper end, 75 passage, 76 ceiling, 77 driving device, 78 hoisting machine, 79 rope, 80, 81, 82, 83 valve, 84 carbon dioxide separation device, 84a heating device, 84b exhaust device, 85, 87 pipe, 86 air supply blower, 88 exhaust blower, 89 cylinder, 90 heated air, 93 duct, 93a upstream duct portion, 93b downstream duct portion, 94 negative pressure region.

## Claims

1. A carbon dioxide capturing apparatus comprising:
a storage unit to accommodate an adsorbent;
a collection unit to collect the adsorbent; and
an adsorption unit, wherein
the adsorption unit has an adsorption space formed therein,
the adsorption unit has an inlet to allow a gas containing carbon dioxide to flow into the adsorption space,
the adsorption unit is disposed between the storage unit and the collection unit,
the adsorbent falls from the storage unit through the adsorption space toward the collection unit by a self-weight of the adsorbent,
the gas is introduced through the inlet into the adsorption space in a direction intersecting a direction in which the adsorbent falls, and
the adsorbent adsorbs in the adsorption space the carbon dioxide contained in the gas.

2. The carbon dioxide capturing apparatus according to claim 1, wherein
the storage unit is disposed above the adsorption unit, and
the collection unit is disposed below the adsorption unit.

3. The carbon dioxide capturing apparatus according to claim 1 or 2, wherein
the storage unit includes a storage body and a first valve,
the storage body has a storage space formed therein to store the adsorbent,
the storage body has a first opening,
the first opening communicates with the storage space and the adsorption space, and
the first valve opens and closes the first opening.

4. The carbon dioxide capturing apparatus according to claim 3,
wherein when the first valve opens the first opening, the first valve closes a portion of the inlet.

5. The carbon dioxide capturing apparatus according to any one of claims 1 to 4, wherein
the adsorption unit includes a first wall and a second wall connected to the first wall,
the first wall and the second wall define a portion of the adsorption space,
the first wall is larger in width than the second wall, and
the inlet is provided through the first wall.

6. The carbon dioxide capturing apparatus according to claim 5,
wherein the inlet has a width of 60% or more and 100% or less of that of the first wall.

7. The carbon dioxide capturing apparatus according to any one of claims 1 to 6, wherein the adsorption unit includes an eave provided above the inlet.

8. The carbon dioxide capturing apparatus according to any one of claims 1 to 7, wherein
the adsorption unit includes a net to pass the gas therethrough and prevent the adsorbent from passing therethrough,
the adsorption unit has an outlet to allow the gas to flow out of the adsorption space, and
the net covers the outlet.

9. The carbon dioxide capturing apparatus according to any one of claims 1 to 8, further comprising at least one inclined plate disposed in the adsorption space and inclined with respect to a horizontal plane, wherein the adsorbent rolls on the at least one inclined plate by the self-weight of the adsorbent.

10. The carbon dioxide capturing apparatus according to claim 9,
wherein
the at least one inclined plate includes a first end fixed to the adsorption unit and a second end opposite to the first end, and
a first distance between the first end and the storage unit is smaller than a second distance between the second end and the storage unit.

11. The carbon dioxide capturing apparatus according to claim 9 or 10, wherein the at least one inclined plate is a plurality of inclined plates.

12. The carbon dioxide capturing apparatus according to any one of claims 1 to 11, further comprising:
a transport container; and
a driving device to move the transport container from a first position facing the adsorption unit to a second position facing the storage unit, wherein
when the transport container is in the first position, the adsorbent having fallen through the adsorption space is accommodated in the transport container, and
when the transport container is in the second position, the adsorbent is supplied from the transport container to the storage unit.

13. The carbon dioxide capturing apparatus according to claim 12,
wherein
the adsorption unit includes a second valve,
the adsorption unit has a second opening to communicate with the adsorption space,
when the transport container is in the first position, the transport container faces the second opening,
the second valve is switchable between a first valve position and a second valve position,
when the second valve is in the first valve position, the second valve guides the adsorbent to the second opening, and
when the second valve is in the second valve position, the second valve guides the adsorbent to the collection unit.

14. The carbon dioxide capturing apparatus according to any one of claims 1 to 11, further comprising:
a carbon dioxide separation device;
a transport container; and
a driving device to move the transport container from a third position facing the collection unit to a second position facing the storage unit, wherein
the collection unit has a collection space formed therein to accommodate the adsorbent having fallen through the adsorption space;
the carbon dioxide separation device separates the carbon dioxide from the adsorbent contained in the collection space,
when the transport container is in the third position, the adsorbent having the carbon dioxide separated therefrom is accommodated in the transport container from the collection unit, and
when the transport container is in the second position, the adsorbent is supplied from the transport container to the storage unit.

15. The carbon dioxide capturing apparatus according to claim 14, wherein the carbon dioxide separation device includes a heating device to heat the adsorbent accommodated in the collection space, and an exhaust device to exhaust from the collection space the carbon dioxide separated from the heated adsorbent.

16. The carbon dioxide capturing apparatus according to claim 14 or 15, wherein
the collection unit has a second opening to communicate with the collection space,
when the transport container is in the third position, the transport container faces the second opening, and
the collection unit includes a second valve to open and close the second opening.

17. The carbon dioxide capturing apparatus according to any one of claims 1 to 16, wherein the adsorbent has a spherical shape or a cylindrical shape.

18. The carbon dioxide capturing apparatus according to any one of claims 1 to 17, installed on a rooftop or a side wall of a building.

19. An air conditioning ventilation system comprising:
the carbon dioxide capturing apparatus according to any one of claims 1 to 17; and
an air conditioning outdoor unit, wherein
the air conditioning outdoor unit has an air intake port, and
the carbon dioxide capturing apparatus is installed in front of the air intake port.

20. An air conditioning ventilation system comprising:
the carbon dioxide capturing apparatus according to any one of claims 1 to 17; and
a duct connected to the carbon dioxide capturing apparatus, wherein
the duct communicates with the inlet.

21. A carbon dioxide capturing method comprising:
adsorbing carbon dioxide contained in a gas on an adsorbent by bringing the adsorbent into contact with the gas containing the carbon dioxide by allowing the adsorbent to fall through an adsorption space of an adsorption unit by a self-weight of the adsorbent, the gas being introduced into the adsorption space in a direction intersecting a direction in which the adsorbent falls; and
collecting the adsorbent having adsorbed the carbon dioxide.

22. The carbon dioxide capturing method according to claim 21, wherein allowing the adsorbent to fall by the self-weight of the adsorbent includes rolling the adsorbent on at least one inclined plate disposed in the adsorption space and inclined with respect to a horizontal plane.

23. The carbon dioxide capturing method according to claim 21 or 22, further comprising: adsorbing the carbon dioxide contained in the gas on the adsorbent having adsorbed the carbon dioxide by bringing the adsorbent having adsorbed the carbon dioxide into contact with the gas by allowing the adsorbent having adsorbed the carbon dioxide to fall through the adsorption space by the self-weight of the adsorbent.

24. The carbon dioxide capturing method according to any one of claims 21 to 23, further comprising:
separating the carbon dioxide from the adsorbent having adsorbed the carbon dioxide; and
adsorbing the carbon dioxide contained in the gas on the adsorbent having the carbon dioxide separated therefrom by bringing the adsorbent having the carbon dioxide separated therefrom into contact with the gas again by allowing the adsorbent having adsorbed the carbon dioxide to fall through the adsorption space by the self-weight of the adsorbent.

25. The carbon dioxide capturing method according to claim 24, wherein the adsorbent having adsorbed the carbon dioxide is heated to separate the carbon dioxide from the adsorbent having adsorbed the carbon dioxide.

26. The carbon dioxide capturing method according to claim 24 or 25, further comprising capturing the carbon dioxide separated from the adsorbent.
